# EUROPÄISCHE PATENTANMELDUNG

(11) **EP 4 850 998 A1**
(43) Veröffentlichungstag der Anmeldung: **09.12.2026**
(21) Anmeldenummer: 26176160.5
(22) Anmeldetag: 04.05.2026
(51) Int. Cl.: B60W 30/02, B60W 10/04, B60W 10/20, B60W 10/22, B60W 10/184, B60W 30/045, B60W 50/00, B60W 50/08

(54) **VERFAHREN UND EINRICHTUNG ZUR HORIZONTALEN STEUERUNG EINES FAHRZEUGS, MEDIUM, PRODUKT UND FAHRZEUG**

(30) Priorität: 03.06.2025 CN 202510737214
(71) Anmelder: ZF Friedrichshafen AG, 88046 Friedrichshafen (DE)
(72) Erfinder: Luo, Zheng, 88046 Friedrichshafen (DE); Wang, Xiandong, 88046 Friedrichshafen (DE)
(74) Vertreter: ZF Friedrichshafen AG

(57) **Zusammenfassung**

In der vorliegenden Anmeldung wird ein Verfahren und eine Einrichtung zur horizontalen Steuerung eines Fahrzeugs, ein Medium, ein Produkt und ein Fahrzeug bereitgestellt. Das Verfahren umfasst: Bestimmen eines Leistungsbewertungsfaktors jedes Aktuators des Fahrzeugs gemäß Echtzeitbetriebsparametern und einem Zielgiermoment des Fahrzeugs, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben; Bestimmen von Giermoment-Verteilungsfaktoren der einzelnen Aktuatoren gemäß dem Leistungsbewertungsfaktor jedes Aktuators; und Verteilen des Zielgiermoments auf die entsprechenden Aktuatoren gemäß den Giermoment-Verteilungsfaktoren der einzelnen Aktuatoren, um die horizontale Steuerung des Fahrzeugs zu erzielen. Bei der Anmeldung kann durch eine dynamische Verteilung des Moments die gute Leistung der Aktuatoren in dem Fahrwerk auch bei komplexen und dynamisch veränderlichen Fahrsituationen ausgenutzt werden, um die gesamte Performance des Fahrzeugs zu verbessern.

## Beschreibung

### Technisches Gebiet

Die vorliegende Anmeldung betrifft das Gebiet von intelligenten Fahrtechnologien, insbesondere ein Verfahren und eine Einrichtung zur horizontalen Steuerung eines Fahrzeugs, ein Medium, ein Produkt und ein Fahrzeug.

### Stand der Technik

Während eines intelligenten Fahrens eines Fahrzeugs, insbesondere eines Schwerfahrzeugs, spielt die horizontale Steuerung eine wichtige Rolle für das sichere, stabile und effiziente Fahren des Fahrzeugs. Die horizontale Steuerung betrifft vor allem die Verstellung und Beibehaltung der Fahrrichtung während des Fahrens des Fahrzeugs, was gewährleistet, dass das Fahrzeug entlang einer vorgegebenen Route fährt.

Zurzeit werden relativ einfache horizontale Steuerverfahren für viele Fahrzeuge verwendet, die in der Regel auf der Verteilung eines Zielgiermoments mit festgelegten Anteilen oder in Abhängigkeit von der Ausnutzung der Reifen basieren. Genauer gesagt wird unter dem Zielgiermoment ein Moment verstanden, das für die Erreichung eines erwünschten Lenkverhaltens des Fahrzeugs erforderlich ist. Dieses Moment soll angemessen auf unterschiedliche Aktuatoren im Fahrwerk des Fahrzeugs, wie auf die des Lenksystems, Bremssystems und Antriebssystems, verteilt werden, um die horizontale Steuerung des Fahrzeugs zu ermöglichen.

Trotz ihrer leichten Umsetzbarkeit können die oben erwähnten Verfahren jedoch die Leistung der Aktuatoren im Fahrwerk bei komplexen und dynamisch veränderlichen Fahrsituationen nicht ausnutzen, was zu einer Verschlechterung der gesamten Performance des Fahrzeugs führt.

### Offenbarung der Erfindung

In der vorliegenden Anmeldung werden ein Verfahren und eine Einrichtung zur horizontalen Steuerung eines Fahrzeugs, ein Medium, ein Produkt und ein Fahrzeug bereitgestellt, um zumindest eines der oben erwähnten technischen Probleme zu beseitigen.

In einem ersten Aspekt stellt die Anmeldung ein Verfahren zur horizontalen Steuerung eines Fahrzeugs bereit, umfassend:
Feststellen eines Leistungsbewertungsfaktors jedes Aktuators des Fahrzeugs gemäß Echtzeitbetriebsparametern und einem Zielgiermoment des Fahrzeugs, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben;
Feststellen von Giermoment-Verteilungsfaktoren der einzelnen Aktuatoren gemäß dem Leistungsbewertungsfaktor jedes Aktuators; und
Verteilen des Zielgiermoments auf die entsprechenden Aktuatoren gemäß den Giermoment-Verteilungsfaktoren der einzelnen Aktuatoren, um die horizontale Steuerung des Fahrzeugs zu erzielen.

In einer Ausführungsform umfassen die Aktuatoren zumindest einen von Antriebsaktuator, Bremsaktuator, Lenkaktuator und Federungsaktuator, und der Leistungsbewertungsfaktor umfasst zumindest einen von Stabilitätsfaktor, Komfortfaktor und Wirtschaftlichkeitsfaktor.

In einer Ausführungsform umfasst das Verfahren ferner:
Feststellen eines Einstellgewichtes jedes Aktuators, das seinem Leistungsbewertungsfaktor entspricht, gemäß einem vorbestimmten Zustand einer horizontalen Steuerdomäne des Fahrzeugs und einem Typ der Präferenz des Fahrers, wobei der Zustand einer horizontalen Steuerdomäne des Fahrzeugs dazu verwendet wird, das Sicherheitsniveau der horizontalen Steuerung des Fahrzeugs anzugeben;
wobei das Feststellen von Giermoment-Verteilungsfaktoren der einzelnen Aktuatoren gemäß dem Leistungsbewertungsfaktor jedes Aktuators Folgendes umfasst:
Feststellen von Giermoment-Verteilungsfaktoren der einzelnen Aktuatoren gemäß dem Leistungsbewertungsfaktor und dem Einstellgewicht jedes Aktuators.

In einer Ausführungsform umfasst die Bestimmung des Zustands der horizontalen Steuerdomäne des Fahrzeugs:
Bestimmen des Zustands der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs,
wobei der Zustand der horizontalen Steuerdomäne des Fahrzeugs in aufsteigender Reihenfolge von Sicherheitsniveaus einen kritischen Bereich, einen gefährlichen Bereich, einen Übergangsbereich und einen stabilen Bereich umfasst.

In einer Ausführungsform umfasst das Bestimmen des Zustands der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs:
Bestimmen, dass sich der Zustand der horizontalen Steuerdomäne des Fahrzeugs in dem kritischen Bereich befindet, wenn das Zielgiermoment die Summe von horizontalen Potenzialen erreicht oder wenn der Sicherheitsfaktor des gesamten Fahrzeugs einen ersten vorgegebenen Schwellenwert N1 erreicht;
Bestimmen, dass sich der Zustand der horizontalen Steuerdomäne des Fahrzeugs in dem gefährlichen Bereich befindet, wenn das Zielgiermoment die Summe von horizontalen Potenzialen nicht erreicht und wenn der Sicherheitsfaktor des gesamten Fahrzeugs einen zweiten vorgegebenen Schwellenwert N2 erreicht aber den ersten vorgegebenen Schwellenwert N1 nicht erreicht;
Bestimmen, dass sich der Zustand der horizontalen Steuerdomäne des Fahrzeugs in dem Übergangsbereich befindet, wenn der Sicherheitsfaktor des gesamten Fahrzeugs einen dritten vorgegebenen Schwellenwert N3 erreicht aber den zweiten vorgegebenen Schwellenwert N2 nicht erreicht; und

Bestimmen, dass sich der Zustand der horizontalen Steuerdomäne des Fahrzeugs in dem stabilen Bereich befindet, wenn der Sicherheitsfaktor des gesamten Fahrzeugs den dritten vorgegebenen Schwellenwert N3 nicht erreicht, wobei N1 > N2 > N3 gilt.

In einer Ausführungsform umfasst die Bestimmung des Sicherheitsfaktors des gesamten Fahrzeugs:
Ermitteln einer Abweichung in Bezug auf Gierwinkelgeschwindigkeit gemäß einem Unterschied zwischen einer Soll-Gierwinkelgeschwindigkeit und einer Ist-Gierwinkelgeschwindigkeit des Fahrzeugs;
Ermitteln einer Abweichung in Bezug auf Schwerpunkt-Schwimmwinkel gemäß einem Unterschied zwischen einem Soll-Schwerpunkt-Schwimmwinkel und einer Ist-Gierwinkelgeschwindigkeit des Fahrzeugs; und
Bestimmen des Sicherheitsfaktors des gesamten Fahrzeugs aus der gewichteten Summe von der Abweichung in Bezug auf Gierwinkelgeschwindigkeit, der Abweichung in Bezug auf Schwerpunkt-Schwimmwinkel und den Beschleunigungen in der lateralen Richtung und der Längsrichtung des Fahrzeugs.

In einer Ausführungsform umfasst das Einstellgewicht ein erstes Gewicht, das dem Stabilitätsfaktor entspricht, ein zweites Gewicht, das dem Komfortfaktor entspricht, und ein drittes Gewicht, das dem Wirtschaftlichkeitsfaktor entspricht,
wobei das Feststellen von Giermoment-Verteilungsfaktoren der einzelnen Aktuatoren gemäß dem Leistungsbewertungsfaktor und dem Einstellgewicht jedes Aktuators Folgendes umfasst:
Feststellen des Verteilungsfaktors für jeden Aktuator aus der Summe von dem Produkt aus dem Stabilitätsfaktor und dem ersten Gewicht, dem Produkt aus dem Komfortfaktor und dem zweiten Gewicht, und dem Produkt aus dem Wirtschaftlichkeitsfaktor und dem dritten Gewicht; und
Feststellen von Giermoment-Verteilungsfaktoren jedes Aktuators gemäß einem Verhältnis des Verteilungsfaktors des Aktuators zu der Summe der Verteilungsfaktoren der einzelnen Aktuatoren,
wobei das Einstellgewicht basierend auf einer voreingestellten Abbildungstabelle von den Zuständen der horizontalen Steuerdomäne des Fahrzeugs und den Typen der Präferenz des Fahrers auf die Einstellgewichte erhalten wird.

In einer Ausführungsform umfasst das Feststellen eines Leistungsbewertungsfaktors jedes Aktuators des Fahrzeugs gemäß Echtzeitbetriebsparametern und einem Zielgiermoment des Fahrzeugs zumindest einen der folgenden Schritte:
Feststellen des Stabilitätsfaktors jedes Aktuators gemäß dem Verhältnis des horizontalen Potenzials des Aktuators zu dem Zielgiermoment;
Feststellen des Komfortfaktors jedes Aktuators gemäß der Geschwindigkeit des Fahrzeugs, dem Zielgiermoment, und einer voreingestellten Abbildungstabelle von der Geschwindigkeit und dem Zielgiermoment auf den Komfortfaktor; und
Feststellen des Wirtschaftlichkeitsfaktors jedes Aktuators gemäß der Geschwindigkeit des Fahrzeugs, dem Zielgiermoment, und einer voreingestellten Abbildungstabelle von der Geschwindigkeit und dem Zielgiermoment auf den Wirtschaftlichkeitsfaktor.

In einem zweiten Aspekt stellt die Anmeldung eine Einrichtung zur horizontalen Steuerung eines Fahrzeugs bereit, umfassend:
ein erstes Feststellungsmodul, das dazu konfiguriert ist, einen Leistungsbewertungsfaktor jedes Aktuators des Fahrzeugs gemäß Echtzeitbetriebsparametern und einem Zielgiermoment des Fahrzeugs festzustellen, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben;
ein zweites Feststellungsmodul, das dazu konfiguriert ist, Giermoment-Verteilungsfaktoren der einzelnen Aktuatoren gemäß dem Leistungsbewertungsfaktor jedes Aktuators festzustellen; und
ein Verteilungsmodul, das dazu konfiguriert ist, das Zielgiermoment auf die entsprechenden Aktuatoren gemäß den Giermoment-Verteilungsfaktoren der einzelnen Aktuatoren zu verteilen, um die horizontale Steuerung des Fahrzeugs zu erzielen.

In einer Ausführungsform umfassen die Aktuatoren zumindest einen von Antriebsaktuator, Bremsaktuator, Lenkaktuator und Federungsaktuator, und der Leistungsbewertungsfaktor umfasst zumindest einen von Stabilitätsfaktor, Komfortfaktor und Wirtschaftlichkeitsfaktor.

In einer Ausführungsform umfasst die Einrichtung ferner:
ein Gewichtsfeststellungsmodul, das dazu konfiguriert ist, ein Einstellgewicht jedes Aktuators, das seinem Leistungsbewertungsfaktor entspricht, gemäß einem vorbestimmten Zustand einer horizontalen Steuerdomäne des Fahrzeugs und einem Typ der Präferenz des Fahrers festzustellen, wobei der Zustand einer horizontalen Steuerdomäne des Fahrzeugs dazu verwendet wird, das Sicherheitsniveau der horizontalen Steuerung des Fahrzeugs anzugeben; und
das zweite Feststellungsmodul, das insbesondere dazu konfiguriert ist, Giermoment-Verteilungsfaktoren der einzelnen Aktuatoren gemäß dem Leistungsbewertungsfaktor jedes Aktuators und seinem Einstellgewicht festzustellen.

In einer Ausführungsform umfasst die Einrichtung ferner ein Zustandsbestimmungsmodul zum Bestimmen des Zustands einer horizontalen Steuerdomäne des Fahrzeugs, das dazu konfiguriert ist, den Zustand der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs zu bestimmen,
wobei der Zustand der horizontalen Steuerdomäne des Fahrzeugs in aufsteigender Reihenfolge von Sicherheitsniveaus einen kritischen Bereich, einen gefährlichen Bereich, einen Übergangsbereich und einen stabilen Bereich umfasst.
In einer Ausführungsform ist das Zustandsbestimmungsmodul insbesondere so konfiguriert, dass es bestimmt,
dass sich der Zustand der horizontalen Steuerdomäne des Fahrzeugs in dem kritischen Bereich befindet, wenn das Zielgiermoment die Summe von horizontalen Potenzialen erreicht oder wenn der Sicherheitsfaktor des gesamten Fahrzeugs einen ersten vorgegebenen Schwellenwert N1 erreicht;
dass sich der Zustand der horizontalen Steuerdomäne des Fahrzeugs in dem gefährlichen Bereich befindet, wenn das Zielgiermoment die Summe von horizontalen Potenzialen nicht erreicht und wenn der Sicherheitsfaktor des gesamten Fahrzeugs einen zweiten vorgegebenen Schwellenwert N2 erreicht aber den ersten vorgegebenen Schwellenwert N1 nicht erreicht;
dass sich der Zustand der horizontalen Steuerdomäne des Fahrzeugs in dem Übergangsbereich befindet, wenn der Sicherheitsfaktor des gesamten Fahrzeugs einen dritten vorgegebenen Schwellenwert N3 erreicht aber den zweiten vorgegebenen Schwellenwert N2 nicht erreicht; und

dass sich der Zustand der horizontalen Steuerdomäne des Fahrzeugs in dem stabilen Bereich befindet, wenn der Sicherheitsfaktor des gesamten Fahrzeugs den dritten vorgegebenen Schwellenwert N3 nicht erreicht, wobei N1 > N2 > N3 gilt.

In einer Ausführungsform umfasst die Einrichtung ferner ein Faktorbestimmungsmodul zum Bestimmen des Sicherheitsfaktors des gesamten Fahrzeugs, das dazu konfiguriert ist, eine Abweichung in Bezug auf Gierwinkelgeschwindigkeit gemäß einem Unterschied zwischen einer Soll-Gierwinkelgeschwindigkeit und einer Ist-Gierwinkelgeschwindigkeit des Fahrzeugs zu ermitteln; eine Abweichung in Bezug auf Schwerpunkt-Schwimmwinkel gemäß einem Unterschied zwischen einem Soll-Schwerpunkt-Schwimmwinkel und einer Ist-Gierwinkelgeschwindigkeit des Fahrzeugs zu ermitteln; und den Sicherheitsfaktor des gesamten Fahrzeugs aus der gewichteten Summe von der Abweichung in Bezug auf Gierwinkelgeschwindigkeit, der Abweichung in Bezug auf Schwerpunkt-Schwimmwinkel und den Beschleunigungen in der lateralen Richtung und der Längsrichtung des Fahrzeugs zu bestimmen.

In einer Ausführungsform umfasst das Einstellgewicht ein erstes Gewicht, das dem Stabilitätsfaktor entspricht, ein zweites Gewicht, das dem Komfortfaktor entspricht, und ein drittes Gewicht, das dem Wirtschaftlichkeitsfaktor entspricht. Dabei umfasst das Feststellen von Giermoment-Verteilungsfaktoren der einzelnen Aktuatoren gemäß dem Leistungsbewertungsfaktor und dem Einstellgewicht jedes Aktuators insbesondere:
Feststellen des Verteilungsfaktors für jeden Aktuator aus der Summe von dem Produkt aus dem Stabilitätsfaktor und dem ersten Gewicht, dem Produkt aus dem Komfortfaktor und dem zweiten Gewicht, und dem Produkt aus dem Wirtschaftlichkeitsfaktor und dem dritten Gewicht; und
Feststellen von Giermoment-Verteilungsfaktoren jedes Aktuators gemäß einem Verhältnis des Verteilungsfaktors des Aktuators zu der Summe der Verteilungsfaktoren der einzelnen Aktuatoren,
wobei das Einstellgewicht basierend auf einer voreingestellten Abbildungstabelle von den Zuständen der horizontalen Steuerdomäne des Fahrzeugs und den Typen der Präferenz des Fahrers auf die Einstellgewichte erhalten wird.

In einer Ausführungsform umfasst das erste Feststellungsmodul zumindest eine der folgenden Einheiten:
eine erste Feststellungseinheit, die dazu konfiguriert ist, den Stabilitätsfaktor jedes Aktuators gemäß dem Verhältnis des horizontalen Potenzials des Aktuators zu dem Zielgiermoment festzustellen;
eine zweite Feststellungseinheit, die dazu konfiguriert ist, den Komfortfaktor jedes Aktuators gemäß der Geschwindigkeit des Fahrzeugs, dem Zielgiermoment, und einer voreingestellten Abbildungstabelle von der Geschwindigkeit und dem Zielgiermoment auf den Komfortfaktor festzustellen; und
eine dritte Feststellungseinheit, die dazu konfiguriert ist, den Wirtschaftlichkeitsfaktor jedes Aktuators gemäß der Geschwindigkeit des Fahrzeugs, dem Zielgiermoment, und einer voreingestellten Abbildungstabelle von der Geschwindigkeit und dem Zielgiermoment auf den Wirtschaftlichkeitsfaktor festzustellen.

In einem dritten Aspekt wird ein Fahrzeug bereitgestellt, umfassend einen Prozessor und einen kommunikativ mit dem Prozessor verbunden Speicher,
wobei der Speicher computerausführbare Anweisungen umfasst,
und wobei der Prozessor die auf dem Speicher gespeicherten computerausführbaren Anweisungen ausführt, um ein Verfahren zur horizontalen Steuerung eines Fahrzeugs in dem voranstehenden ersten Aspekt zu implementieren.

In einem vierten Aspekt wird ein computerlesbares Speichermedium bereitgestellt, auf dem computerausführbare Anweisungen gespeichert sind, die beim Ausführen durch einen Prozessor dazu verwendet werden, ein Verfahren zur horizontalen Steuerung eines Fahrzeugs in dem voranstehenden ersten Aspekt zu implementieren.

In einem fünften Aspekt wird ein Computerprogrammprodukt bereitgestellt, das ein Computerprogramm umfasst, das beim Ausführen durch einen Prozessor ein Verfahren zur horizontalen Steuerung eines Fahrzeugs in dem voranstehenden ersten Aspekt implementiert.

In der vorliegenden Anmeldung wird ein Verfahren und eine Einrichtung zur horizontalen Steuerung eines Fahrzeugs, ein Medium, ein Produkt und ein Fahrzeug bereitgestellt. Die horizontale Steuerung des Fahrzeugs wird dabei durch das Bestimmen des Leistungsbewertungsfaktors jedes Aktuators des Fahrzeugs gemäß Echtzeitbetriebsparametern und dem Zielgiermoment des Fahrzeugs, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben; das Bestimmen von Giermoment-Verteilungsfaktoren der einzelnen Aktuatoren gemäß dem Leistungsbewertungsfaktor jedes Aktuators; und das Verteilen des Zielgiermoments auf die entsprechenden Aktuatoren gemäß den Giermoment-Verteilungsfaktoren der einzelnen Aktuatoren erzielt. Dabei werden die Leistungsbewertungsfaktoren für die einzelnen Aktuatoren, die den Einfluss des jeweiligen Aktuators auf die Qualität des Fahrzustands und auf die Kosten des Fahrzeugs charakterisieren, in Kombination mit den Betriebsparametern und dem Zielgiermoment des Fahrzeugs in Echtzeit berechnet. Basierend auf den Leistungsbewegungsfaktoren wird die Verteilungsstrategie für das Giermoment dynamisch angepasst, so dass eine bessere und universellere Leistung des Fahrwerk-Domänencontrollers und ein besseres horizontales Steuerungsverhalten des Fahrzeugs erzielt werden können, wodurch die gesamte Performance des Fahrzeugs erhöht wird.

### Kurzbeschreibung der Figuren

Die Zeichnungen hierin sind in die Beschreibung aufgenommen und bilden einen Teil dieser Beschreibung. Dabei zeigen sie die der vorliegenden Anmeldung entsprechenden Ausführungsbeispiele und dienen zusammen mit der Beschreibung zur Erläuterung der Prinzipien der vorliegenden Anmeldung.
Figur 1 ist ein schematisches Ablaufdiagramm eines in einem Ausführungsbeispiel der Anmeldung bereitgestellten Verfahrens zur horizontalen Steuerung eines Fahrzeugs;
Figur 2 ist ein schematische Diagramm der Verteilung eines Zielgiermoments in dem Ausführungsbeispiel der Anmeldung;
Figur 3 ist ein schematisches Ablaufdiagramm eines weiteren, in einem Ausführungsbeispiel der Anmeldung bereitgestellten Verfahrens zur horizontalen Steuerung eines Fahrzeugs;
Figur 4 ist ein schematisches Diagramm der Verteilung des Zustands einer horizontalen Steuerdomäne des Fahrzeugs in einem Ausführungsbeispiel der Anmeldung;
Figur 5 ist ein Diagramm einer möglichen, in einem beispielhaften Ausführungsbeispiel der Anmeldung bereitgestellten Systemarchitektur;
Figur 6 ist ein schematisches Ablaufdiagramm eines in einem beispielhaften Ausführungsbeispiel der Anmeldung bereitgestellten Verfahrens zur horizontalen Steuerung eines Fahrzeugs;
Figur 7 ist ein schematisches strukturelles Diagramm einer in einem Ausführungsbeispiel der Anmeldung bereitgestellten Einrichtung zur horizontalen Steuerung eines Fahrzeugs; und
Figur 8 ist ein schematisches Diagramm eines in einem Ausführungsbeispiel der Anmeldung bereitgestellten Fahrzeugs.

In den obigen Zeichnungen sind konkrete Ausführungsbeispiele der vorliegenden Anmeldung dargestellt. Im Folgenden werden diese noch näher beschrieben. Die Zeichnungen und Texte hierhin dienen nicht dazu, den Umfang der Idee der vorliegenden Anmeldung in irgendeiner Weise einzuschränken, sondern dazu, den Fachleuten auf diesem Gebiet den Kontext der vorliegenden Anmeldung unter Bezugnahme auf spezifische Ausführungsbeispiele der vorliegenden Anmeldung zu erläutern.

### Ausführliche Ausführungsformen

Hierin werden die beispielhaften Ausführungsbeispiele näher beschrieben, die in den beigefügten Zeichnungen beispielhaft dargestellt sind. Wenn die nachfolgende Beschreibung die Figuren betrifft, stehen die gleichen Bezugszeichen in verschiedenen Figuren für das gleiche bzw. ein ähnliches Element, falls nicht anders angegeben. Die in den nachfolgenden beispielhaften Ausführungsbeispielen beschriebenen Ausführungsformen repräsentieren nicht alle mit der Anmeldung übereinstimmenden Ausführungsformen. Dagegen stellen sie nur die Beispiele der Einrichtung bzw. des Verfahrens dar, die in den beigefügten Ansprüchen detailliert erläutert werden und mit einigen Aspekten der Anmeldung übereinstimmen.

Der Ausdruck "und/oder" in den Ausführungsbeispielen der Anmeldung dient der Beschreibung einer Verknüpfung zwischen Elementen, so dass drei Verhältnisse vorliegen können. Beispielsweise kann der Ausdruck A und/oder B drei Fälle bedeuten, dass A allein vorliegt, A und B gleichzeitig vorliegen, und B allein vorliegt. Der Symbol "/" bedeutet in der Regel ein alternatives ("oder") Verhältnis zwischen den Elementen davor und danach.

Die horizontale Steuerung, also die horizontale Steuerung der Fahrwerk-Domäne eines Fahrzeugs, bezieht sich auf eine genaue Verwaltung der Dynamik des Fahrzeugs in den horizontalen Richtungen, um zu gewährleisten, dass das Fahrzeug entlang einer erwarteten Route fahren kann. Die horizontale Steuerung spielt eine sehr wichtige Rolle bei den Fahrzeugen mit intelligenten und automatischen Fahrfunktionen, da sie die Stabilität, die Sicherheit und den Komfort des Fahrzeugs unmittelbar beeinflusst. Die herkömmlichen Schemen für horizontale Steuerung basieren vor allem auf der Verteilung eines Zielgiermoments mit festgelegten Anteilen oder in Abhängigkeit von der Ausnutzung der Reifen, die bei komplexen und dynamisch veränderlichen Fahrsituationen die Leistung der Aktuatoren im Fahrwerk nicht ausnutzen können.

Um die horizontale Steuerungsfunktion zu optimieren, wird im Stand der Technik ein optimales online-Verteilungsverfahren, bei dem wie z. B. eine niedrigste gesamte Ausnutzung der Reifen als Optimierungsziel verwendet wird, oder ein fortgeschrittener Steuerungsalgorithmus, wie die Steuerung durch Modellvorhersage bzw. das neuronale Netzwerk, für die Berechnung und Optimierung der Verteilungsfaktoren angewandt, so dass das Fahrzeug komplexe dynamische Veränderungen ansprechen kann. Jedoch erfordert ein solches Verfahren eine große Menge an Rechenressourcen und eine hohe Echtzeitfähigkeit, so dass es noch nicht für Verbreitung geeignet ist.

In Anbetracht dessen wird in den Ausführungsbeispielen der vorliegenden Anmeldung eine Lösung zur horizontalen Steuerung eines Fahrzeugs, die für dynamische Echtzeit-Situationen geeignet ist, bereitgestellt. Dabei wird die horizontale Steuerung des Fahrzeugs durch das Bestimmen des Leistungsbewertungsfaktors jedes Aktuators des Fahrzeugs gemäß Echtzeitbetriebsparametern und dem Zielgiermoment des Fahrzeugs, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben, das Bestimmen von Giermoment-Verteilungsfaktoren der einzelnen Aktuatoren gemäß dem Leistungsbewertungsfaktor jedes Aktuators, und das Verteilen des Zielgiermoments auf die entsprechenden Aktuatoren gemäß den Giermoment-Verteilungsfaktoren der einzelnen Aktuatoren erzielt. Dabei werden die Leistungsbewertungsfaktoren für die einzelnen Aktuatoren, die den Einfluss des jeweiligen Aktuators auf die Qualität des Fahrzustands und auf die Kosten des Fahrzeugs charakterisieren, in Kombination mit den Echtzeit-Betriebsparametern und dem Zielgiermoment des Fahrzeugs in Echtzeit berechnet. Basierend auf den Leistungsbewegungsfaktoren wird die Verteilungsstrategie für das Giermoment dynamisch angepasst, so dass eine bessere und universellere Steuerungsleistung über die Fahrwerk-Domäne und ein besseres horizontales Steuerungsverhalten des Fahrzeugs erzielt werden können, wodurch die gesamte Performance des Fahrzeugs erhöht wird. Darüber hinaus können diese Faktoren, mit denen die Leistungen der Aktuatoren beurteilt werden, wie der Stabilitäts-, Komfort-, und Wirtschaftlichkeitsfaktor, aufgrund von Echtzeit- Daten schnell bestimmt werden, ohne komplizierte mechanische Berechnung für die Reifen durchführen oder ein konvergiertes Modell erstellen zu müssen, was die Rechenkomplexität und die Belastung für Echtzeit-Berechnung erheblich reduziert und damit die gesamte Performance und Reaktionsgeschwindigkeit des Fahrzeugs erhöht.

Nachfolgend werden die technischen Lösungen der Anmeldung und ihrer Beseitigung der oben erwähnten technischen Probleme mit den konkreten Ausführungsbeispielen näher erläutert. Die folgenden konkreten Ausführungsbeispiele können miteinander kombiniert werden, und auf die gleichen oder ähnlichen Konzepten bzw. Vorgänge wird möglicherweise in einigen Ausführungsbeispielen nicht mehr näher eingegangen. Die Ausführungsbeispiele der Anmeldung werden nachfolgend im Zusammenhang mit den Zeichnungen beschrieben.

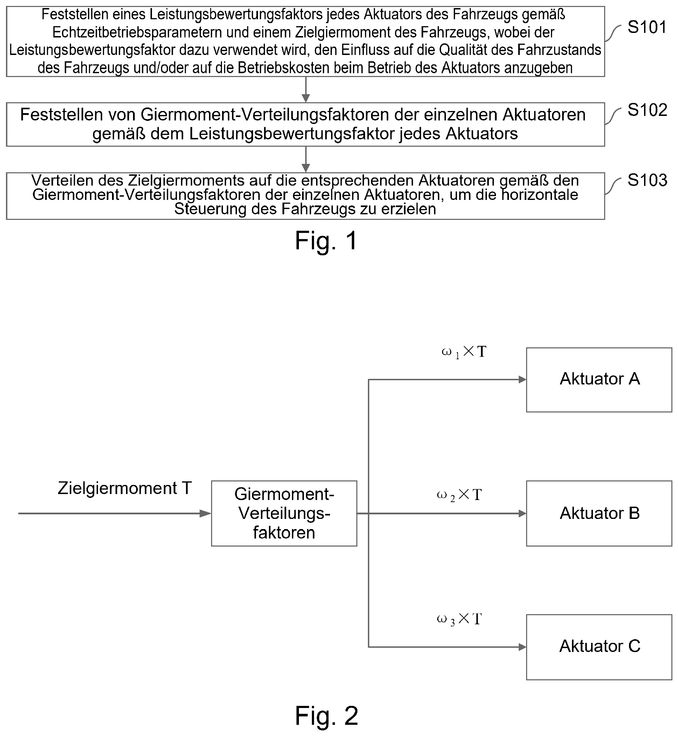

Fig. 1 ist ein Ablaufdiagramm eines Verfahrens zur Routenplanung eines Fahrzeugs gemäß einem Ausführungsbeispiel der Anmeldung. In diesem Ausführungsbeispiel wird ein Verfahren zur horizontalen Steuerung eines Fahrzeugs bereitgestellt, das durch ein elektronisches Gerät, wie einen Fahrwerk-Domänencontroller des Fahrzeugs, ausgeführt werden kann. Wie in Fig. 1 gezeigt umfasst das Verfahren die folgenden Schritte:
Schritt S101: Feststellen eines Leistungsbewertungsfaktors jedes Aktuators des Fahrzeugs gemäß Echtzeitbetriebsparametern und einem Zielgiermoment des Fahrzeugs, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben.

Beispielhaft können die Echtzeitbetriebsparameter die Geschwindigkeit des Fahrzeugs, die horizontalen Potenziale der Aktuatoren (wie die des Lenksystems, des Bremssystems, und dergleichen) usw. umfassen. Dabei wird unter dem horizontalen Potenzial die potenzielle Fähigkeit verstanden, eine maximale horizontale Kraft oder ein maximales horizontales Moment während der horizontalen Steuerung des Fahrzeugs unter den aktuellen Bedingungen bereitzustellen. Die horizontalen Potenziale spiegeln die Grenze der Performance der Aktuatoren unter bestimmten Betriebsbedingungen wider und können aus Straßenhaftungsfaktor und anderen Parameter berechnet werden. Optional handelt es sich bei dem Zielgiermoment um ein Zielgiermoment des gesamten Fahrzeugs, welches von dem Fahrer eingegeben werden oder durch eine Funktion auf einer höheren Ebene des Fahrwerk-Domänencontrollers berechnet werden kann.

Unter Berücksichtigung der Nachteile der herkömmlichen Lösungen für die horizontale Steuerung eines Fahrzeugs unter dynamischen Bedingungen insbesondere hinsichtlich der Optimierung der Performance der Aktuatoren und der Energieeffizienz-Verwaltung wird bei diesem Ausführungsbeispiel die Performance jedes der Aktuatoren gemäß den Echtzeitbetriebsparametern (wie die Geschwindigkeit des Fahrzeugs und die horizontalen Potenziale der Aktuatoren), die zur Feststellung der Leistungsbewertungsfaktoren, die den Einfluss des Aktuators auf die Qualität des Fahrzustands (wie die Stabilität und den Komfort) sowie die Betriebskosten (wie die Wirtschaftlichkeit) des Fahrzeugs angeben, des Aktuators unter den Echtzeit-Betriebsbedingungen beitragen, dynamisch beurteilt. Durch die Berechnung der Leistungsbewertungsfaktoren für die einzelnen Aktuatoren und die Verwendung derselben in der nachfolgenden dynamischen Verteilung des Zielgiermoments können eine bessere und universellere Leistung des Fahrwerk-Domänencontrollers und ein besseres horizontales Verhalten des gesamten Fahrzeugs erzielt werden, wodurch die gesamte Performance des Fahrzeugs erhöht wird.

In einer Ausführungsform können die Aktuatoren zumindest einen von Antriebsaktuator, Bremsaktuator, Lenkaktuator und Federungsaktuator umfassen, und der Leistungsbewertungsfaktor kann zumindest einen von Stabilitätsfaktor, Komfortfaktor und Wirtschaftlichkeitsfaktor umfassen.

Die herkömmlichen Lösungen für die horizontale Steuerung fokussieren sich vor allem auf die Leistung des Fahrwerks und vernachlässigen die Probleme mit dem Komfort, Energieverbrauch, und dergleichen. Mit der Entwicklung von energieintensiven Fahrwerk-Komponenten, wie aktive Federung, beeinflusst beispielsweise die Auswahl unterschiedlicher Aktuatoren den Energieverbrauch und die Wirtschaftlichkeit des gesamten Fahrzeugs, insbesondere bei Elektrofahrzeugen. Dies bedeutet, dass eine nicht angemessene Auswahl der Aktuatoren die Reichweite des Fahrzeugs reduzieren kann, auch wenn das gleiche Ziel für die horizontale Steuerung erreicht wird. Zudem führen unterschiedliche Fahrwerk-Aktuatoren bei dem Ausüben des Giermoments zu unterschiedlichen Geräuschen, Vibrationen und Rauheiten (NVH). Die herkömmlichen Steuerverfahren konzentrieren sich typischerweise auf die Leistung bei der horizontalen Steuerung, ohne den Einfluss dieser Aktuatoren auf NVH zu berücksichtigen, und können daher keinen optimalen Ausgleich zwischen der horizontalen Leistung und dem Komfort finden. In Anbetracht dessen werden bei diesem Ausführungsbeispiel die Aktuatoren durch die Leistungsbewertungsfaktoren bemessen, so dass eine angemessenere Verteilung des Moments ermöglicht wird.

Dabei wird der Stabilitätsfaktor des Aktuators dazu verwendet, die Wirkung des Aktuators in Bezug auf das Beibehalten der Stabilität während des Fahrens des Fahrzeugs zu repräsentieren; der Komfortfaktor des Aktuators wird dazu verwendet, den durch den Aktuator erzielten Komfort des Benutzers während des Fahrens des Fahrzeugs, der durch die Vibrationen, die Geräusche, und die Glätte der Beschleunigung bzw. Verzögerung, und dergleichen widergespiegelt wird, zu repräsentieren; und der Wirtschaftlichkeitsfaktor des Aktuators wird dazu verwendet, die Beeinflussung des Aktuators auf den Energieverbrauch und die Kosten des Fahrzeugs während des Fahrens des Fahrzeugs zu repräsentieren.

In einigen Ausführungsbeispielen kann mit der Entwicklung von Technologien auch ein anderer Aktuator bzw. ein anderer Leistungsbewertungsfaktor angewandt, und diesbezüglich soll keine besondere Beschränkung auferlegt werden.

In einer Ausführungsform kann der Schritt S101, also das Feststellen eines Leistungsbewertungsfaktors jedes Aktuators des Fahrzeugs gemäß Echtzeitbetriebsparametern und einem Zielgiermoment des Fahrzeugs, nach einer oder mehreren der folgenden Methoden durchgeführt werden:
Methode I: Feststellen des Stabilitätsfaktors jedes Aktuators gemäß dem Verhältnis des horizontalen Potenzials des Aktuators zu dem Zielgiermoment.

Beispielhaft kann der Stabilitätsfaktor des Aktuators durch die Berechnung des Verhältnisses des horizontalen Potenzials zu dem Zielgiermoment erhalten werden, welches den Vergleich der potenziellen Fähigkeit des Aktuators mit dem tatsächlichen Bedarf unter den aktuellen Bedingungen darstellen kann. Ein hohes Verhältnis bedeutet, dass der Aktuator eine genügende Fähigkeit, den aktuellen Behandlungsbedarf zu erfüllen, und damit eine hohe Stabilität aufweist.

Als weiteres Beispiel können bei der Berechnung des Stabilitätsfaktors des Aktuators der Beeinflussungsfaktor des Reifens und der Reaktionsverzögerungsfaktor für die Erhöhung der Berechnungsgenauigkeit mit einberechnet werden, da der Zustand der Reifen (wie der Abrieb, die Temperatur, der Druck davon) und die Reaktionsgeschwindigkeit des Aktuators einen starken Einfluss auf die Stabilität des Fahrzeugs haben. Optional kann die Berechnung des Stabilitätsfaktors nach der folgenden Gleichung erfolgen: 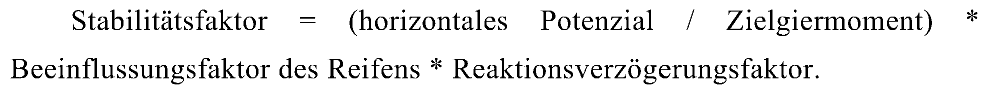 Stabilitätsfaktor = (horizontales Potenzial / Zielgiermoment) * Beeinflussungsfaktor des Reifens * Reaktionsverzögerungsfaktor.

Dabei dient der Beeinflussungsfaktor des Reifens der Anpassung des Stabilitätsfaktors, um die Beeinflussung des Zustands des Reifens auf die Leistung des Aktuators widerzuspiegeln. Mit die Verwendung des Reaktionsverzögerungsfaktors wird die zeitliche Verzögerung von dem Empfang eines Steuersignals bis zu der tatsächlichen Ausgabe des Moments mit einberechnet. Eine kleinere Verzögerung bedeutet in der Regel eine höhere Stabilität.

Durch die Berechnung des Stabilitätsfaktors kann das Fahrzeug genauer den Beitrag jedes Aktuators zur Stabilität unter den aktuellen Fahrbedingungen beurteilen, so dass das Fahrzeug eine wirksame Verteilung des Moments unter den verschiedenen Aktuatoren ausführen kann, wodurch die Behandlung und die Stabilität des Fahrzeugs optimiert werden.

Methode II: Feststellen des Komfortfaktors jedes Aktuators gemäß der Geschwindigkeit des Fahrzeugs, dem Zielgiermoment, und einer voreingestellten Abbildungstabelle von der Geschwindigkeit und dem Zielgiermoment auf den Komfortfaktor.

In diesem Ausführungsbeispiel kann die Abbildungstabelle eine vorher etablierte Tabelle sein, in der die Komfortfaktoren bei unterschiedlichen Kombinationen der Geschwindigkeit des Fahrzeugs mit dem Zielgiermoment aufgezeichnet werden. Optional kann die Abbildungstabelle entweder basierend auf massiven Versuchsdaten oder den Eigenschaften des Fahrzeugs, oder basierend auf Forschungen der Benutzererfahrungsdaten erhalten werden, um den Einfluss des Aktuators auf den Komfort des Fahrzeugs unter verschiedenen Betriebsbedingungen widerzuspiegeln.

Beispielhaft kann die Abbildungstabelle in einer Datenbank gespeichert werden, und der Komfortfaktor des Aktuators wird durch das Kalibrieren und das Suchen in der Tabelle in Echtzeit ausgegeben. Die Tabelle für Kalibrierung kann auch die oben erwähnte Abbildungstabelle sein, die eine zweidimensionale Kalibrierungstabelle darstellt, bei der die Geschwindigkeit des Fahrzeugs und das Zielgiermoment eingegeben werden und der Komfortfaktor des Aktuators ausgegeben wird. In einigen Beispielen kann der Komfortfaktor durch Interpolation geschätzt werden, wenn der aktuelle Wert des Parameters in der Tabelle nicht vorhanden ist. So kann ein genaueres Ergebnis erhalten werden.

Durch die Feststellung des Komfortfaktors jedes Aktuators kann das Steuersystem des Fahrzeugs die Behandlung und den Fahrkomfort besser ausgleichen, um eine angemessene Verteilung des Moments unter den Aktuatoren zu ermöglichen, die negative Beeinflussung auf den Fahrkomfort des Fahrzeugs zu reduzieren, und dem Benutzer eine komfortablere Fahrerfahrung bereitzustellen.

Methode III: Feststellen des Wirtschaftlichkeitsfaktors jedes Aktuators gemäß der Geschwindigkeit des Fahrzeugs, dem Zielgiermoment, und einer voreingestellten Abbildungstabelle von der Geschwindigkeit und dem Zielgiermoment auf den Wirtschaftlichkeitsfaktor.

Die Abbildungstabelle kann ebenfalls eine vorher etablierte Tabelle sein, in der die Wirtschaftlichkeitsfaktoren bei unterschiedlichen Kombinationen der Geschwindigkeit des Fahrzeugs mit dem Zielgiermoment aufgezeichnet werden.

Durch die Feststellung des Wirtschaftlichkeitsfaktors jedes Aktuators kann das Fahrzeug bei der horizontalen Steuerung die Verwaltung des Energieverbrauchs optimieren und die Betriebskosten vermindern. Insbesondere soll das Moment unter Berücksichtigung des Wirtschaftlichkeitsfaktors angemessen verteilt werden, um die Energieeffizienz zu optimieren, was insbesondere bei einem Elektrofahrzeug für die Verlängerung der Reichweite kritisch ist.

In einigen Methoden können die obigen Methode I bis III kombiniert werden, um gemeinsam die Leistungsbewertungsfaktoren jedes Aktuators zu bestimmen. Darauf wird hier nicht mehr eingegangen.

Schritt S102: Feststellen von Giermoment-Verteilungsfaktoren der einzelnen Aktuatoren gemäß dem Leistungsbewertungsfaktor jedes Aktuators.

Beispielhaft wird nur ein einziger Leistungsbewertungsfaktor als Beispiel genommen (bei der Verwendung mehrerer Leistungsbewertungsfaktoren kann ein gesamtes Bewertungssystem durch Gewichtung und Addieren berechnet werden). Die Aktuatoren können nach ihren Leistungsbewertungsfaktoren geordnet werden und mit dem Ordnungsergebnis ist der optimale Aktuator unter den aktuellen Bedingungen erkennbar. Dabei bedeutet ein höherer Rang eines Aktuators, dass dieser Aktuator besser dafür geeignet ist, unter den aktuellen Bedingungen mehr Giermoment zu übernehmen.

Beispielsweise wird angenommen, dass drei Aktuatoren A, B und C vorhanden sind, deren Leistungsbewertungsfaktoren in der Reihenfolge A > B > C geordnet sind. Beispielsweise wird 50% des Zielgiermoments auf Aktuator A (1. in der Rangliste), 30% des Zielgiermoments auf Aktuator B (2. in der Rangliste) und 20% des Zielgiermoments auf Aktuator C (3. in der Rangliste) verteilt.

Während des Fahrens des Fahrzeugs können der Zustand des Fahrzeugs und die Veränderung der Umgebung in Echtzeit überwachen, wie das Vorhandensein einer Veränderung eines Betriebsparameters oder die Erfüllung einer Schwellenwertbedingung, die der Fachmann an die praktische Anwendung angepasst einstellen kann, durch diese Veränderung in Echtzeit, um die Giermoment-Verteilungsfaktoren dynamisch einzustellen und damit die neue Fahrbedingung anzupassen.

In einigen Beispielen können auch auf andere Weise die Giermoment-Verteilungsfaktoren der einzelnen Aktuatoren festgestellt werden. Beispielsweise können die Giermoment-Verteilungsfaktoren der einzelnen Aktuatoren in Kombination mit anderen Faktoren, wie dem Zustand einer horizontalen Steuerdomäne des Fahrzeugs und dem Typ der Präferenz des Fahrers berechnet werden. Der konkrete Ablauf dafür wird in den Ausführungsbeispielen weiter unten erläutert und hier wird nicht näher darauf eingegangen.

Schritt S103: Verteilen des Zielgiermoments auf die entsprechenden Aktuatoren gemäß den Giermoment-Verteilungsfaktoren der einzelnen Aktuatoren, um die horizontale Steuerung des Fahrzeugs zu erzielen.

Nach der Feststellung der Giermoment-Verteilungsfaktoren kann das Zielgiermoment des gesamten Fahrzeugs gemäß den Verteilungsfaktoren nach Bedarf auf die einzelnen Aktuatoren verteilt werden. Beispielhaft wird wie in Fig. 2 gezeigt angenommen, dass das Zielgiermoment des gesamten Fahrzeugs T ist und das Zielgiermoment jedes Aktuators Tᵢ durch Multiplizieren seines Verteilungsfaktors ωi mit T berechnet wird, worin i den i-ten Aktuator angibt. So wird für Aktuator A das Zielgiermoment T₁ = ω₁ × T, für Aktuator B das Zielgiermoment T₂ = ω₂ × T, für Aktuator C das Zielgiermoment T₃ = ω₃ × T gegeben, mit ω₁ + ω₂ + ω₃ = 1. Anschließend wird das Zielgiermoment jedes Aktuators in eine ausführliche Anweisung des Aktuators umgewandelt, z. B. der entsprechende Bedarf nach Moment wird in einen Strom des elektrischen Motors, einen hydraulischen Druck, oder ein Steuersignal in einer anderen Form umgewandelt. Über einen Steuerbus (wie CAN-Bus) des Fahrzeugs werden die berechneten Zielanweisungen an die jeweiligen Aktuatoren gesendet, so dass sie entsprechende Aktionen durchführen, um die horizontale Steuerung des Fahrzeugs zu erzielen.

Durch die oben beschriebene technische Lösung werden die Leistungsbewertungsfaktoren für die einzelnen Aktuatoren in Kombination mit den Echtzeit-Betriebsparametern und dem Zielgiermoment des Fahrzeugs in Echtzeit berechnet, und basierend auf den Leistungsbewegungsfaktoren wird die Verteilungsstrategie für das Giermoment dynamisch angepasst, so dass eine bessere und universellere Steuerungsleistung über die Fahrwerk-Domäne und ein besseres horizontales Steuerungsverhalten des Fahrzeugs erzielt werden, wodurch die gesamte Performance des Fahrzeugs erhöht wird. Darüber hinaus können diese Faktoren, mit denen die Leistungen der Aktuatoren beurteilt werden, wie der Stabilitäts-, Komfort-, und Wirtschaftlichkeitsfaktor, aufgrund von Echtzeit-Daten schnell bestimmt werden, ohne komplizierte mechanische Berechnung für die Reifen durchführen oder ein konvergiertes Modell erstellen zu müssen, was die Rechenkomplexität und die Belastung für Echtzeit-Berechnung erheblich reduziert und damit die gesamte Performance und Reaktionsgeschwindigkeit des Fahrzeugs erhöht.

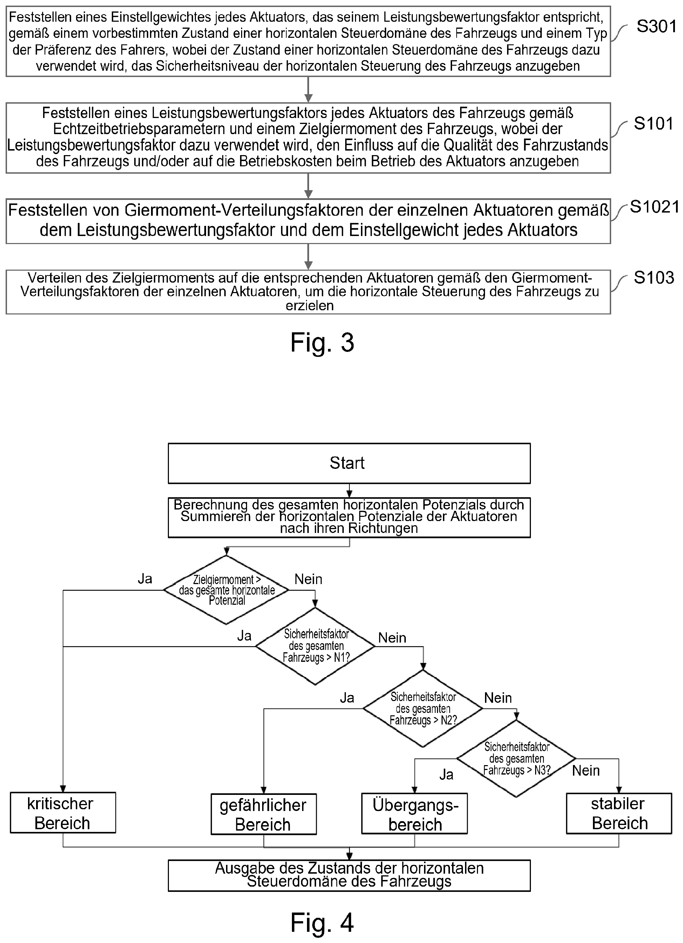

Fig. 3 ist ein schematisches Ablaufdiagramm eines weiteren, in einem Ausführungsbeispiel der Anmeldung bereitgestellten Verfahrens zur horizontalen Steuerung eines Fahrzeugs. Auf der Basis des oben beschriebenen Ausführungsbeispiels wird in diesem Ausführungsbeispiel ferner der Sicherheitszustand des Fahrzeugs und die Präferenz des Fahrers bei der horizontalen Steuerung berücksichtigt. Das Verfahren umfasst ferner Schritt S301, und weiter wird dabei der Schritt S102 durch Schritt S1021 ersetzt.

Schritt S301: Feststellen eines Einstellgewichtes jedes Aktuators, das seinem Leistungsbewertungsfaktor entspricht, gemäß einem vorbestimmten Zustand einer horizontalen Steuerdomäne des Fahrzeugs und einem Typ der Präferenz des Fahrers, wobei der Zustand einer horizontalen Steuerdomäne des Fahrzeugs dazu verwendet wird, das Sicherheitsniveau der horizontalen Steuerung des Fahrzeugs anzugeben.

Beispielhaft wird der Zustand einer horizontalen Steuerdomäne des Fahrzeugs dazu verwendet, das Sicherheitsniveau, auf dem sich das Fahrzeug aktuell befindet, anzuzeigen. Es kann in Abhängigkeit von mehreren Echtzeit-Parametern, wie die Geschwindigkeit des Fahrzeugs, gemeinsam festgestellt werden. Beispielsweise ist das Sicherheitsniveau beim Fahren mit einer hohen Geschwindigkeit höher und eine sorgfältigere Steuerung ist dafür erforderlich. Alternativ kann der Zustand der Steuerdomäne, in dem sich das Fahrzeug aktuell befindet, gemäß anderen dynamischen Zuständen des Fahrzeugs, wie der Gierwinkelgeschwindigkeit, der lateralen Beschleunigung, usw., erkannt werden. Basierend auf den oben erwähnten Parametern wird der Zustand der horizontalen Steuerdomäne in mehrere Zustandsdomänen (einen kritischen Bereich, einen gefährlichen Bereich, einen sicheren Bereich, usw.) unterteilt, um unterschiedliche Steuerungsstrategien bei unterschiedlichen Sicherheitsniveaus zu verfolgen.

Beispielhaft kann die Präferenz des Fahrers entweder durch Erkennung der Dynamik des Fahrzeugs (wie gemäß dem historischen Verhalten des Fahrers) oder durch Interaktion mit einer Fahrzeugschnittstelle (wie durch die Eingabe des Typs der Präferenz von dem Fahrer oder durch die Auswahl des Fahrmodus) erhalten werden. Hierbei kann der Typ der Präferenz eine Präferenz für Stabilität, bei der der Fahrer der Stabilität und Sicherheit bei verschiedenen Fahrbedingungen des Fahrzeugs Vorzug gibt, eine Präferenz für Komfort, bei der der Fahrer auf den Fahrkomfort und das NVH-Verhalten fokussiert, und eine Präferenz für Wirtschaftlichkeit, bei der der Fahrer die Effizienz des Brennstoffes bzw. die Reichweite der Batterie maximalisieren möchte, umfassen.

Durch die Unterteilung des Zustands der horizontalen Steuerdomäne des Fahrzeugs und die Erkennung des Typs der Präferenz des Fahrers werden die berechneten Einstellgewichte für den Leistungsbewertungsfaktor jedes Aktuators angewandt, um seinen Beitrag zu der Verteilung des Giermoments dynamisch einzustellen. Basierend auf den eingestellten Leistungsbewertungsfaktoren kann die Verteilungsstrategie für das Giermoment optimiert werden, so dass das Fahrzeug intelligente und individualisierte Steuerungsstrategien bei unterschiedlichen Fahrbedingungen verfolgen kann, was die gesamte Performance und die Fahrerfahrung des Fahrzeugs verbessert.

In einigen Ausführungsbeispielen wird die Genauigkeit der Unterteilung des Zustands der horizontalen Zustandsdomäne des Fahrzeugs weiter erhöht, so dass sich das Unterteilungsergebnis besser an die tatsächliche Fahrsituation anpassen kann. Die oben beschriebene Feststellung des Zustands der horizontalen Steuerdomäne des Fahrzeugs kann wie folgt durchgeführt werden:
Bestimmen des Zustands der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs,
wobei der Zustand der horizontalen Steuerdomäne des Fahrzeugs in aufsteigender Reihenfolge von Sicherheitsniveaus einen kritischen Bereich, einen gefährlichen Bereich, einen Übergangsbereich und einen stabilen Bereich umfasst.

Oben wurde bereits erwähnt, dass unter dem horizontalen Potenzial jedes Aktuators das maximale Giermoment bzw. die maximale laterale Kraft verstanden wird, das bzw. die von diesem Aktuator unter den aktuellen Bedingungen bereitgestellt werden kann und basierend auf den physikalischen Eigenschaften, dem aktuellen Zustand (wie der Temperatur und dem Abrieb) und den Umgebungsbedingungen (wie dem Reibungskoeffizienten der Straße) berechnet werden kann. Durch die Berechnung der Summe der horizontalen Potenziale aller Aktuatoren kann die möglichst hohe horizontale Steuerungsfähigkeit des Fahrzeugs unter den aktuellen Bedingungen beurteilt werden. Bei dem Ausführungsbeispiel wird die Summe der horizontalen Potenziale mit dem Zielgiermoment verglichen. Wenn die horizontalen Potenziale größer als das Zielgiermoment sind, weist das Fahrzeug eine genügende Fähigkeit auf, die aktuelle Anforderung an die Behandlung zu erfüllen, d. h. eine hohe Sicherheit zu realisieren. Wenn jedoch die horizontalen Potenziale kleiner als das Zielgiermoment sind, könnte das Fahrzeug vor einem Risiko einer mangelnden Behandlung stehen, d. h. eine niedrige Sicherheit aufweisen.

Der Sicherheitsfaktor des gesamten Fahrzeugs, der für die Bewertung der Sicherheit des Fahrzeugs unter den aktuellen Bedingungen verwendet wird, kann basierend auf den dynamischen Parametern des Fahrzeugs berechnet werden. Weiter kann er basierend auf der Abweichung in Bezug auf die Gierwinkelgeschwindigkeit des Fahrzeugs, der Abweichung in Bezug auf den Schwerpunkt-Schwimmwinkel, den Beschleunigungen in der lateralen Richtung und der Längsrichtung, und anderen Parametern berechnet werden. Insbesondere kann die Bestimmung des Sicherheitsfaktors des gesamten Fahrzeugs erfolgen, indem eine Abweichung in Bezug auf Gierwinkelgeschwindigkeit gemäß einem Unterschied zwischen einer Soll-Gierwinkelgeschwindigkeit und einer Ist-Gierwinkelgeschwindigkeit des Fahrzeugs ermittelt wird; eine Abweichung in Bezug auf Schwerpunkt-Schwimmwinkel gemäß einem Unterschied zwischen einem Soll-Schwerpunkt-Schwimmwinkel und einer Ist-Gierwinkelgeschwindigkeit des Fahrzeugs ermittelt wird; und der Sicherheitsfaktor des gesamten Fahrzeugs aus der gewichteten Summe von der Abweichung in Bezug auf Gierwinkelgeschwindigkeit, der Abweichung in Bezug auf Schwerpunkt-Schwimmwinkel und den Beschleunigungen in der lateralen Richtung und der Längsrichtung des Fahrzeugs bestimmt wird.

Insbesondere wird gemäß dem Unterschied zwischen der Soll-Gierwinkelgeschwindigkeit und der Ist-Gierwinkelgeschwindigkeit des Fahrzeugs die Abweichung in Bezug auf Gierwinkelgeschwindigkeit, die die Differenz zwischen dem aktuellen dynamischen Verhalten und dem idealen Zustand widerspiegelt, berechnet. Dann wird der Unterschied zwischen dem Soll-Schwerpunkt-Schwimmwinkel und dem Ist-Schwerpunkt-Schwimmwinkel berechnet, um die Abweichung in Bezug auf den Schwerpunkt-Schwimmwinkel, der die Abweichung des Fahrzeugs von der Fahrroutine angibt, zu ermitteln. Zudem wird die Beschleunigung des Fahrzeugs in der lateralen Richtung bzw. in der Längsrichtung mit einberechnet, die die Beschleunigung des Fahrzeugs in der Querrichtung und der Längsrichtung widerspiegelt. Durch die Gewichtung und Berechnung der Abweichung in Bezug auf Gierwinkelgeschwindigkeit, der Abweichung in Bezug auf Schwerpunkt-Schwimmwinkel und der Beschleunigungen in der lateralen Richtung und der Längsrichtung kann ein genauerer Sicherheitsfaktor des gesamten Fahrzeugs bestimmt werden.

Beispielhaft kann der Stabilitätsfaktors des gesamten Fahrzeugs nach der folgenden Gleichung berechnet werden: $A = {k}_{Gier} \left({\dot{φ}}_{Tgt}-{\dot{φ}}_{Act}\right) + {k}_{beta} \left({β}_{Tgt}-{β}_{Act}\right) + {k}_{lat} {a}_{y} + {k}_{lang} {a}_{x}$
worin A für den Sicherheitsfaktor des gesamten Fahrzeugs steht, *φ̇_{Tgt}* für die Soll-Gierwinkelgeschwindigkeit steht, *φ̇_{Act}* für die Ist-Gierwinkelgeschwindigkeit steht, *β_{Tgt}* für den Soll-Schwerpunkt-Schwimmwinkel steht, *β_{Act}* für den Ist-Schwerpunkt-Schwimmwinkel steht, *a_{y}* für die Beschleunigung in der lateralen Richtung steht, *aₓ* für die Beschleunigung in der Längsrichtung steht, und *k_{Gier}, k_{beta}, kₗₐₜ,* und *k_{lang}* für Korrekturfaktoren, die durch Kalibrieren und Suchen in der Tabelle, die gemäß historischen Daten etabliert werden kann, ermittelt werden, stehen.
worin es sich bei dem stabilen Bereich um den Zustand, in dem das Fahrzeug sicher und stabil ist, bei dem gefährlichen Bereich um den Zustand, in dem das Fahrzeug die Kontrolle verlieren könnte und eine Maßnahme ergreifen soll, und bei dem kritischen Bereich um einen Grenzzustand des Fahrzeugs, in dem es nicht stabil gehalten werden könnte, handelt.

Auf diese Weise kann die Verteilungsstrategie für das Giermoment in Verbindung mit dem Zustand der horizontalen Steuerdomäne des Fahrzeugs dynamisch eingestellt werden, um die Performance des Fahrzeugs in unterschiedlichen Zuständen zu erhöhen.

In einem weiteren Beispiel dieses Ausführungsbeispiels kann das Bestimmen des Zustands der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs mit den folgenden Schritten durchgeführt werden:
Bestimmen, dass sich der Zustand der horizontalen Steuerdomäne des Fahrzeugs in dem kritischen Bereich befindet, wenn das Zielgiermoment die Summe von horizontalen Potenzialen erreicht oder wenn der Sicherheitsfaktor des gesamten Fahrzeugs einen ersten vorgegebenen Schwellenwert N1 erreicht;
Bestimmen, dass sich der Zustand der horizontalen Steuerdomäne des Fahrzeugs in dem gefährlichen Bereich befindet, wenn das Zielgiermoment die Summe von horizontalen Potenzialen nicht erreicht und wenn der Sicherheitsfaktor des gesamten Fahrzeugs einen zweiten vorgegebenen Schwellenwert N2 erreicht aber den ersten vorgegebenen Schwellenwert N1 nicht erreicht;
Bestimmen, dass sich der Zustand der horizontalen Steuerdomäne des Fahrzeugs in dem Übergangsbereich befindet, wenn der Sicherheitsfaktor des gesamten Fahrzeugs einen dritten vorgegebenen Schwellenwert N3 erreicht aber den zweiten vorgegebenen Schwellenwert N2 nicht erreicht; und

Bestimmen, dass sich der Zustand der horizontalen Steuerdomäne des Fahrzeugs in dem stabilen Bereich befindet, wenn der Sicherheitsfaktor des gesamten Fahrzeugs den dritten vorgegebenen Schwellenwert N3 nicht erreicht, wobei N1 > N2 > N3 gilt.

In diesem Beispiel wird der Zustand der horizontalen Steuerdomäne des Fahrzeugs sowohl gemäß dem Vergleichsergebnis der Summe der horizontalen Potenziale mit dem Zielgiermoment als auch gemäß dem Sicherheitsfaktor des gesamten Fahrzeugs unterteilt. Um das Verständnis zu erleichtern, wird auf Fig. 4 verwiesen. Wenn das Zielgiermoment die Summe der horizontalen Potenziale erreicht (größer als oder gleich dieser ist) oder wenn der Sicherheitsfaktor des gesamten Fahrzeugs den ersten vorgegebenen Schwellenwert N1 erreicht, wird es so angesehen, dass sich das Fahrzeug im kritischen Bereich befindet, was bedeuten kann, dass sich das Fahrzeug seiner dynamischen Grenze annähert oder diese erreicht. Wenn das Zielgiermoment die Summe der horizontalen Potenziale nicht erreicht und wenn der Sicherheitsfaktor des gesamten Fahrzeugs den zweiten vorgegebenen Schwellenwert N2 aber nicht N1 erreicht, wird es so angesehen, dass sich das Fahrzeug im gefährlichen Bereich befindet, was bedeuten kann, dass ein bestimmtes Risiko des Kontrollverlustes des Fahrzeugs besteht. Wenn der Sicherheitsfaktor des gesamten Fahrzeugs den dritten vorgegebenen Schwellenwert N3 aber nicht N2 erreicht, wird es so angesehen, dass sich das Fahrzeug im Übergangsbereich befindet, was bedeuten kann, dass sich das Fahrzeug in einem vorübergehenden Zustand befindet. Wenn der Sicherheitsfaktor des gesamten Fahrzeugs den dritten vorgegebenen Schwellenwert N3 nicht erreicht, wird es so angesehen, dass sich das Fahrzeug im stabilen Bereich befindet, was bedeuten kann, dass sich das Fahrzeug in einem sicheren und stabilen Zustand befindet. So kann der Zustand des Fahrzeugs in einem sicheren Bereich relativ genau erkannt werden, um nachfolgend die Verteilung des Giermoments dynamisch einzustellen und damit die Sicherheit und Stabilität des Fahrzeugs zu verbessern.

In einigen Ausführungsbeispielen kann alternativ nur ein Zustand der horizontalen Steuerdomäne des Fahrzeugs, der mit einer der oben beschriebenen Methoden festgestellt werden kann, allein eingesetzt werden. Beispielsweise kann der Zustand der horizontalen Domänensteuerung des Fahrzeugs gemäß dem Unterschied zwischen dem Zielgiermoment und der horizontalen Potenziale unterteilt werden. Alternativ kann der Zustand der horizontalen Domänensteuerung des Fahrzeugs gemäß dem entsprechenden Abschnitt, in dem sich der Sicherheitsfaktor des gesamten Fahrzeugs befindet, unterteilt werden. Als weitere Alternative kann in einigen Ausführungsbeispielen der Zustand der horizontalen Steuerdomäne des Fahrzeugs auf andere Weise bestimmt werden. In den Ausführungsbeispielen wird keine besondere Beschränkung diesbezüglich auferlegt.

Schritt S1021: Feststellen von Giermoment-Verteilungsfaktoren der einzelnen Aktuatoren gemäß dem Leistungsbewertungsfaktor und dem Einstellgewicht jedes Aktuators.

Bei der Verteilung des Zielgiermoments auf die Aktuatoren durch den herkömmlichen Fahrwerk-Domänencontroller werden die Präferenz des Fahrers und der Zustand der horizontalen Steuerdomäne des Fahrzeugs nicht berücksichtigt. Mit der zunehmenden Anzahl an elektrisch gesteuerten Elementen in dem Fahrwerk bestehen in den meisten Szenarien tatsächlich viele Kombinationen der Arten und Beiträge der Aktuatoren zur Erfüllung der Anforderung an das Zielgiermoment. Jedoch werden in den herkömmlichen Verfahren die Präferenz und der Stil des Fahrers nicht berücksichtigt, so dass es die detaillierteren Anforderungen unterschiedlicher Fahrer nicht erfüllen kann und sich nicht adaptiv stufenlos an die Präferenz und den Stil des Fahrers anpassen kann, was zu einer schlechten Fahrerfahrung führt. Da die Umgebung um das Fahrzeug dynamisch veränderlich ist, kann das Fahrzeug nicht zur Gewährleistung seiner Sicherheit und Stabilität schnell angepasst werden, wenn der Zustand der horizontalen Steuerdomäne des Fahrzeugs nicht berücksichtigt wird. In dem Ausführungsbeispiel werden die Einstellgewichte in Verbindung mit dem oben beschriebenen Typ der Präferenz des Fahrers und dem Zustand der horizontalen Steuerdomäne des Fahrzeugs festgestellt und die Giermoment-Verteilungsfaktoren dynamisch eingestellt, um das obige Problem wirksam zu lösen.

Insbesondere wird durch die Echtzeit- Berechnung des Sicherheitsfaktors des gesamten Fahrzeugs der Bewegungszustand des Fahrzeugs dem kritischen Bereich, dem gefährlichen Bereich, dem Übergangsbereich bzw. dem stabilen Bereich zugeordnet. In unterschiedlichen Bereichen werden unterschiedliche Gewichtsfaktoren für die Stabilitätsfaktoren, Komfortfaktoren und Wirtschaftlichkeitsfaktoren der Aktuatoren verwendet. In dem stabilen Bereich werden beispielsweise die Gewichtsfaktoren der Komfortfaktoren und Wirtschaftlichkeitsfaktoren der Aktuatoren gemäß der Erfassung der Präferenz des Fahrers intelligent erhöht, so dass die Verteilung des Zielgiermoments zu den Aktuatoren neigt, die unter diesen Betriebsbedingungen einen besseren Komfort und eine bessere Wirtschaftlichkeit besitzen, um einen höheren Komfort und eine höhere Wirtschaftlichkeit unter Erreichung des Ziels der horizontalen Steuerung des gesamten Fahrzeugs durch den Fahrwerk-Domänencontroller zu erzielen.

In einer Ausführungsform umfasst das Einstellgewicht ein erstes Gewicht, das dem Stabilitätsfaktor entspricht, ein zweites Gewicht, das dem Komfortfaktor entspricht, und ein drittes Gewicht, das dem Wirtschaftlichkeitsfaktor entspricht. In dem oben beschriebenen Schritt S1021 kann das Feststellen von Giermoment-Verteilungsfaktoren der einzelnen Aktuatoren gemäß dem Leistungsbewertungsfaktor und dem Einstellgewicht jedes Aktuators die folgenden Schritte umfassen: Feststellen des Verteilungsfaktors für jeden Aktuator aus der Summe von dem Produkt aus dem Stabilitätsfaktor und dem ersten Gewicht, dem Produkt aus dem Komfortfaktor und dem zweiten Gewicht, und dem Produkt aus dem Wirtschaftlichkeitsfaktor und dem dritten Gewicht; und Feststellen von Giermoment-Verteilungsfaktoren jedes Aktuators gemäß einem Verhältnis des Verteilungsfaktors des Aktuators zu der Summe der Verteilungsfaktoren der einzelnen Aktuatoren. Dabei wird das Einstellgewicht basierend auf einer voreingestellten Abbildungstabelle von den Zuständen der horizontalen Steuerdomäne des Fahrzeugs und den Typen der Präferenz des Fahrers auf die Einstellgewichte erhalten.

In diesem Ausführungsbeispiel kann ein entsprechendes Gewicht einem der unterschiedlichen Leistungsbewertungsfaktoren zugeordnet werden. Beispielhaft kann der Verteilungsfaktor des Aktuators durch die folgende Gleichung berechnet werden:
Verteilungsfaktor des Aktuators = K1 * Stabilitätsfaktor + K2 * Komfortfaktor + K3 Wirtschaftlichkeitsfaktor. In der Gleichung steht K1, K2 bzw. K3 für das erste, zweite bzw. dritte Gewicht, die steuernde Gewichte sind und aus dem Zustand der horizontalen Steuerdomäne des Fahrzeugs und dem Typ der Präferenz des Fahrers durch Kalibrieren und Suchen ausgegeben werden.

Es ist zu verstehen, dass der Fachmann in Verbindung mit den praktischen Anwendungen oder Nutzerforschungsdaten oder maschinellen Lernmodellen gemäß den historischen Daten die Abbildungstabelle von den Zuständen der horizontalen Steuerdomäne des Fahrzeugs und den Typen der Präferenz des Fahrers auf die Einstellgewichte bestimmen kann. Beispielsweise wird angenommen, dass im kritischen Bereich der Typ der Präferenz des Fahrers als Präferenz für Stabilität eingestellt wird, so dass der Wert von K1 im kritischen Bereich auf einen hohen Wert eingestellt wird, um die Stabilität und die Sicherheit des Fahrzeugs sicherzustellen. Alternativ wird angenommen, dass im kritischen Bereich der Typ der Präferenz des Fahrers als Präferenz für Komfort eingestellt wird, so dass trotz der Verbesserung des Komforts der Wert von K2 im kritischen Bereich auf einen verhältnismäßig niedrigen Wert eingestellt wird, um vor allem die Sicherheit zu gewährleisten.

Bei z. B. der Berechnung des Giermoment-Verteilungsfaktors für Aktuator A gilt der Giermoment-Verteilungsfaktors für Aktuator A = Verteilungsfaktor für Aktuator A / (Verteilungsfaktor für Aktuator A + Verteilungsfaktor für Aktuator B + Verteilungsfaktor für Aktuator C...). Die Giermoment-Verteilungsfaktoren anderer Aktuatoren können ebenfalls berechnet werden, und darauf wird nicht mehr näher eingegangen.

Auf diese Weise kann bei dem Ausführungsbeispiel die Verteilung auf die Aktuatoren für die horizontale Steuerung des Fahrwerk-Domänencontrollers unter verschiedenen Betriebssituationen immer intelligent erfolgen, was die Sicherheit und Fahrfähigkeit des gesamten Fahrzeugs gewährleistet. Bei einer bestimmten geeigneten Betriebssituation können das NVH-Verhalten und die Wirtschaftlichkeit des gesamten Fahrzeugs weiter verbessert werden und die Reichweite des Fahrzeugs kann auch erhöht werden.

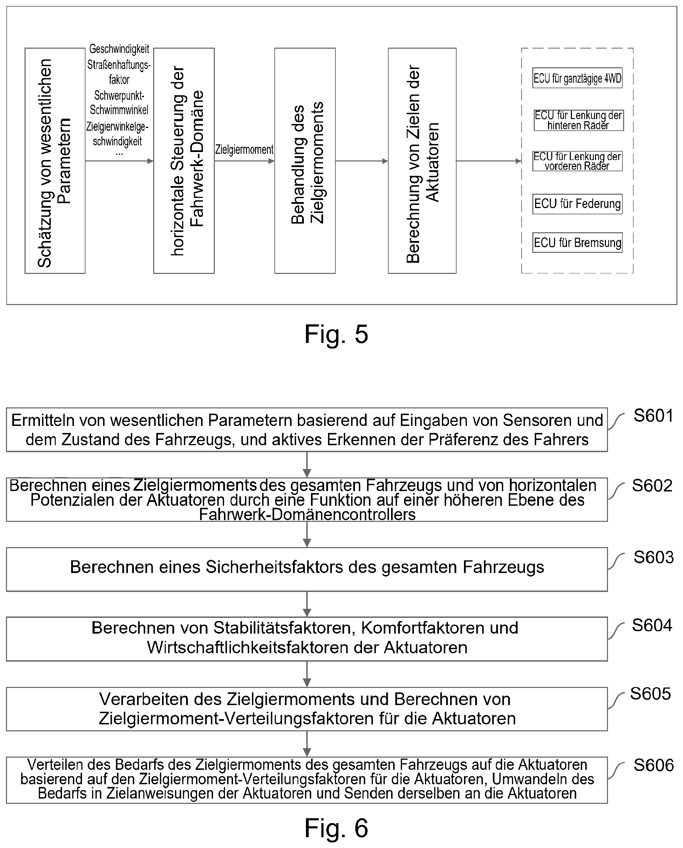

Um das Verständnis der Ausführungsbeispiele der Anmeldung zu erleichtern, wird auf Fig. 5 und Fig. 6 verwiesen. In Fig. 5 ist ein Diagramm einer möglichen Systemarchitektur dargestellt, und in Fig. 6 ist ein Ablaufdiagramm eines Verfahrens zur horizontalen Steuerung eines Fahrzeugs gemäß einem beispielhaft Ausführungsbeispiel im Rahmen der Systemarchitektur dargestellt. Wie in Fig. 5 gezeigt, umfasst die Systemarchitektur ein Schätzungsmodul für wesentliche Parameter, ein Funktionsmodul für die horizontale Steuerung der Fahrwerk-Domäne, ein Verarbeitungsmodul für das Zielgiermoment, ein Aktuatorzielberechnungsmodul und die den Aktuatoren entsprechenden elektronischen Steuereinheiten.

Dabei dient das Schätzungsmodul für wesentliche Parameter der Schätzung der für die horizontale Steuerung des Fahrzeugs wesentlichen Parameter, wie der Geschwindigkeit des Fahrzeugs, des Straßenhaftungsfaktors (der Haftungsfaktor zwischen dem Reifen und der Straße), des Schwerpunkt-Schwimmwinkels, der Zielgierwinkelgeschwindigkeit, usw. Diese Parameter können als grundlegende Eingabe für nachgeschaltete Steuerfunktion verwendet werden.

Die Funktionsmodul für die horizontale Steuerung der Fahrwerk-Domäne kann die Ausgabe aus dem Schätzungsmodul für wesentliche Parameter empfangen und die Berechnung und Verarbeitung dieser Parameter durchführen, um das Zielgiermoment zu generieren. Dieses Modul kann in Verbindung mit dem aktuellen Bewegungszustand des Fahrzeugs und dem erwünschten Fahrzustand bestimmen, wie groß ein Giermoment ausgeübt werden soll, um das Fahrzeug stabil zu halten oder ein erwünschtes Ergebnis der Behandlung zu realisieren. In einigen Ausführungsbeispielen kann das Zielgiermoment auch in Verbindung mit der Eingabe des Fahrers berechnet werden.

Da eine Vielzahl von Aktuatoren des Fahrzeugs Einfluss auf das Giermoment haben kann, kann das Verarbeitungsmodul für das Zielgiermoment, das dem ersten und zweiten Feststellungsmodul weiter unten entspricht, den Stabilitätsfaktor, den Komfortfaktor und den Wirtschaftlichkeitsfaktor jedes Aktuators berechnen und in Verbindung mit diesen Parametern die Verteilungsfaktoren für das Zielgiermoment feststellen, um eine nachfolgende intelligente Verteilung des Zielgiermoments zu ermöglichen.

Das Aktuatorzielberechnungsmodul, das dem Verteilungsmodul weiter unten entspricht, berechnet weiter den konkreten Zielwert für jeden Aktuator basierend auf den von dem Verarbeitungsmodul für das Zielgiermoment erhaltenen Verteilungsfaktoren. Diese Zielwerte werden an die entsprechenden elektronischen Steuereinheiten (ECU) gesendet.

Die den Aktuatoren entsprechenden elektronischen Steuereinheiten können die elektronischen Steuereinheiten für den Antriebsaktuator, Bremsaktuator, Lenkaktuator und Federungsaktuator, wie z. B. die elektronische Steuereinheit für ganztägigen Vierradantrieb (AWD ECU), die elektronische Steuereinheit für Lenkung der hinteren Räder (RWS ECU), die elektronische Steuereinheit für Lenkung der vorderen Räder (FWS ECU), die elektronische Steuereinheit für Federung (Suspension ECU) und die elektronische Steuereinheit für Bremsung (Brake ECU), umfassen. Diese ECU steuern die Aktionen der entsprechenden Aktuatoren gemäß den empfangenen berechneten Ergebnissen der Ziele der Aktuatoren, z. B. verändern sie die Verteilung der Antriebskraft auf die Räder, den Lenkwinkel, die Steifigkeit der Federung, die Bremskraft, usw., um eventuell eine genaue Steuerung der horizontalen Bewegung des Fahrzeugs zu erzielen.

In Verbindung mit der in Fig. 5 beispielhaft gezeigten Systemarchitektur umfasst bei dem in Fig. 6 gezeigten beispielhaften Ausführungsbeispiel der Ablauf des Verfahrens zur horizontalen Steuerung eines Fahrzeugs die folgenden Schritte:
Schritt S601: Ermitteln von wesentlichen Parametern basierend auf Eingaben von Sensoren und dem Zustand des Fahrzeugs, und aktives Erkennen der Präferenz des Fahrers;
Schritt S602: Berechnen eines Zielgiermoments des gesamten Fahrzeugs und von horizontalen Potenzialen der Aktuatoren durch eine Funktion auf einer höheren Ebene des Fahrwerk-Domänencontrollers;
Schritt S603: Berechnen eines Sicherheitsfaktors des gesamten Fahrzeugs;
Schritt S604: Berechnen von Stabilitätsfaktoren, Komfortfaktoren und Wirtschaftlichkeitsfaktoren der Aktuatoren;
Schritt S605: Verarbeiten des Zielgiermoments und Berechnen von Zielgiermoment-Verteilungsfaktoren für die Aktuatoren; und
Schritt S606: Verteilen des Bedarfs des Zielgiermoments des gesamten Fahrzeugs auf die Aktuatoren basierend auf den Zielgiermoment-Verteilungsfaktoren für die Aktuatoren, Umwandeln des Bedarfs in Zielanweisungen der Aktuatoren und Senden derselben an die Aktuatoren.

Bei dem Ausführungsbeispiel wird die intelligente Verteilung des Zielgiermoments für die horizontale Steuerungsfunktion des Fahrwerk-Domänencontrollers auf die Aktuatoren des Fahrwerks durch die Echtzeit-Berechnung der Stabilitätsfaktoren, Komfortfaktoren und Wirtschaftlichkeitsfaktoren der Aktuatoren sowie der Sicherheitsfaktoren des gesamten Fahrzeugs und durch die Anpassung der Einstellgewichte der Stabilitätsfaktoren, der Komfortfaktoren und der Wirtschaftlichkeitsfaktoren der Aktuatoren gemäß dem Ergebnis der Erkennung der Präferenz des Fahrers, dem Zustand des gesamten Fahrzeugs und den tatsächlichen Betriebssituationen erzielt, um eine bessere und universellere Leistung des Fahrwerk-Domänencontrollers und ein besseres horizontales Verhalten des gesamten Fahrzeugs zu erzielen.

Insbesondere wird bei dem Ausführungsbeispiel durch die Echtzeit-Berechnung des Sicherheitsfaktors des gesamten Fahrzeugs der Bewegungszustand des Fahrzeugs dem kritischen Bereich, dem gefährlichen Bereich, dem Übergangsbereich bzw. dem stabilen Bereich zugeordnet. In unterschiedlichen Bereichen werden unterschiedliche Gewichtsfaktoren für die Stabilitätsfaktoren, Komfortfaktoren und Wirtschaftlichkeitsfaktoren der Aktuatoren verwendet. In dem stabilen Bereich werden beispielsweise die Gewichtsfaktoren der Komfortfaktoren und Wirtschaftlichkeitsfaktoren der Aktuatoren gemäß der Erfassung der Präferenz des Fahrers intelligent erhöht, so dass die Verteilung des Zielgiermoments zu den Aktuatoren neigt, die unter diesen Betriebsbedingungen einen besseren Komfort und eine bessere Wirtschaftlichkeit besitzen, um einen höheren Komfort und eine höhere Wirtschaftlichkeit unter Erreichung des Ziels der horizontalen Steuerung des gesamten Fahrzeugs durch den Fahrwerk-Domänencontroller zu erzielen. Daher kann bei dem Ausführungsbeispiel die Verteilung auf die Aktuatoren für die horizontale Steuerung des Fahrwerk-Domänencontrollers unter verschiedenen Betriebssituationen immer intelligent erfolgen, was die Sicherheit und Fahrfähigkeit des gesamten Fahrzeugs gewährleistet. Bei einer bestimmten geeigneten Betriebssituation können das NVH-Verhalten und die Wirtschaftlichkeit des gesamten Fahrzeugs weiter verbessert werden und die Reichweite des Fahrzeugs kann auch erhöht werden.

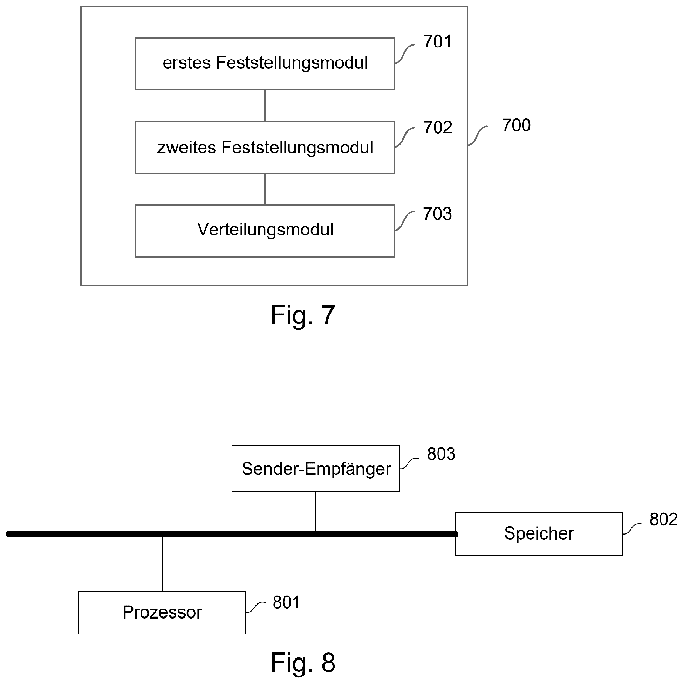

Fig. 7 ist ein schematisches strukturelles Diagramm einer in einem Ausführungsbeispiel der Anmeldung bereitgestellten Einrichtung zur horizontalen Steuerung eines Fahrzeugs. Wie in Fig. 7 gezeigt, umfasst die Einrichtung 700 ein erstes Feststellungsmodul 701, ein zweites Feststellungsmodul 702 und ein Verteilungsmodul 703.

Dabei ist das erste Feststellungsmodul 701 dazu konfiguriert, einen Leistungsbewertungsfaktor jedes Aktuators des Fahrzeugs gemäß Echtzeitbetriebsparametern und einem Zielgiermoment des Fahrzeugs festzustellen, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben.

Das zweite Feststellungsmodul 702 ist dazu konfiguriert, Giermoment-Verteilungsfaktoren der einzelnen Aktuatoren gemäß dem Leistungsbewertungsfaktor jedes Aktuators festzustellen.

Das Verteilungsmodul 702 ist dazu konfiguriert, das Zielgiermoment auf die entsprechenden Aktuatoren gemäß den Giermoment-Verteilungsfaktoren der einzelnen Aktuatoren zu verteilen, um die horizontale Steuerung des Fahrzeugs zu erzielen.

In einer Ausführungsform umfassen die Aktuatoren zumindest einen von Antriebsaktuator, Bremsaktuator, Lenkaktuator und Federungsaktuator, und der Leistungsbewertungsfaktor umfasst zumindest einen von Stabilitätsfaktor, Komfortfaktor und Wirtschaftlichkeitsfaktor.

In einer Ausführungsform umfasst die Einrichtung ferner:
ein Gewichtsfeststellungsmodul, das dazu konfiguriert ist, ein Einstellgewicht jedes Aktuators, das seinem Leistungsbewertungsfaktor entspricht, gemäß einem vorbestimmten Zustand einer horizontalen Steuerdomäne des Fahrzeugs und einem Typ der Präferenz des Fahrers festzustellen, wobei der Zustand einer horizontalen Steuerdomäne des Fahrzeugs dazu verwendet wird, das Sicherheitsniveau der horizontalen Steuerung des Fahrzeugs anzugeben; und
das zweite Feststellungsmodul 702, das insbesondere dazu konfiguriert ist, Giermoment-Verteilungsfaktoren der einzelnen Aktuatoren gemäß dem Leistungsbewertungsfaktor jedes Aktuators und seinem Einstellgewicht festzustellen.

In einer Ausführungsform umfasst die Einrichtung ferner ein Zustandsbestimmungsmodul zum Bestimmen des Zustands einer horizontalen Steuerdomäne des Fahrzeugs, das dazu konfiguriert ist, den Zustand der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs zu bestimmen,
wobei der Zustand der horizontalen Steuerdomäne des Fahrzeugs in aufsteigender Reihenfolge von Sicherheitsniveaus einen kritischen Bereich, einen gefährlichen Bereich, einen Übergangsbereich und einen stabilen Bereich umfasst.

In einer Ausführungsform ist das Zustandsbestimmungsmodul insbesondere so konfiguriert, dass es bestimmt,
dass sich der Zustand der horizontalen Steuerdomäne des Fahrzeugs in dem kritischen Bereich befindet, wenn das Zielgiermoment die Summe von horizontalen Potenzialen erreicht oder wenn der Sicherheitsfaktor des gesamten Fahrzeugs einen ersten vorgegebenen Schwellenwert N1 erreicht;
dass sich der Zustand der horizontalen Steuerdomäne des Fahrzeugs in dem gefährlichen Bereich befindet, wenn das Zielgiermoment die Summe von horizontalen Potenzialen nicht erreicht und wenn der Sicherheitsfaktor des gesamten Fahrzeugs einen zweiten vorgegebenen Schwellenwert N2 erreicht aber den ersten vorgegebenen Schwellenwert N1 nicht erreicht;
dass sich der Zustand der horizontalen Steuerdomäne des Fahrzeugs in dem Übergangsbereich befindet, wenn der Sicherheitsfaktor des gesamten Fahrzeugs einen dritten vorgegebenen Schwellenwert N3 erreicht aber den zweiten vorgegebenen Schwellenwert N2 nicht erreicht; und
dass sich der Zustand der horizontalen Steuerdomäne des Fahrzeugs in dem stabilen Bereich befindet, wenn der Sicherheitsfaktor des gesamten Fahrzeugs den dritten vorgegebenen Schwellenwert N3 nicht erreicht, wobei N1 > N2 > N3 gilt.

In einer Ausführungsform umfasst die Einrichtung ferner ein Faktorbestimmungsmodul zum Bestimmen des Sicherheitsfaktors des gesamten Fahrzeugs, das dazu konfiguriert ist, eine Abweichung in Bezug auf Gierwinkelgeschwindigkeit gemäß einem Unterschied zwischen einer Soll-Gierwinkelgeschwindigkeit und einer Ist-Gierwinkelgeschwindigkeit des Fahrzeugs zu ermitteln; eine Abweichung in Bezug auf Schwerpunkt-Schwimmwinkel gemäß einem Unterschied zwischen einem Soll-Schwerpunkt-Schwimmwinkel und einer Ist-Gierwinkelgeschwindigkeit des Fahrzeugs zu ermitteln; und den Sicherheitsfaktor des gesamten Fahrzeugs aus der gewichteten Summe von der Abweichung in Bezug auf Gierwinkelgeschwindigkeit, der Abweichung in Bezug auf Schwerpunkt-Schwimmwinkel und den Beschleunigungen in der lateralen Richtung und der Längsrichtung des Fahrzeugs zu bestimmen.

In einer Ausführungsform umfasst das Einstellgewicht ein erstes Gewicht, das dem Stabilitätsfaktor entspricht, ein zweites Gewicht, das dem Komfortfaktor entspricht, und ein drittes Gewicht, das dem Wirtschaftlichkeitsfaktor entspricht. Dabei umfasst das Feststellen von Giermoment-Verteilungsfaktoren der einzelnen Aktuatoren gemäß dem Leistungsbewertungsfaktor und dem Einstellgewicht jedes Aktuators insbesondere:
Feststellen des Verteilungsfaktors für jeden Aktuator aus der Summe von dem Produkt aus dem Stabilitätsfaktor und dem ersten Gewicht, dem Produkt aus dem Komfortfaktor und dem zweiten Gewicht, und dem Produkt aus dem Wirtschaftlichkeitsfaktor und dem dritten Gewicht; und
Feststellen von Giermoment-Verteilungsfaktoren jedes Aktuators gemäß einem Verhältnis des Verteilungsfaktors des Aktuators zu der Summe der Verteilungsfaktoren der einzelnen Aktuatoren,
wobei das Einstellgewicht basierend auf einer voreingestellten Abbildungstabelle von den Zuständen der horizontalen Steuerdomäne des Fahrzeugs und den Typen der Präferenz des Fahrers auf die Einstellgewichte erhalten wird.

In einer Ausführungsform umfasst das erste Feststellungsmodul 701 zumindest eine der folgenden Einheiten:
eine erste Feststellungseinheit, die dazu konfiguriert ist, den Stabilitätsfaktor jedes Aktuators gemäß dem Verhältnis des horizontalen Potenzials des Aktuators zu dem Zielgiermoment festzustellen;
eine zweite Feststellungseinheit, die dazu konfiguriert ist, den Komfortfaktor jedes Aktuators gemäß der Geschwindigkeit des Fahrzeugs, dem Zielgiermoment, und einer voreingestellten Abbildungstabelle von der Geschwindigkeit und dem Zielgiermoment auf den Komfortfaktor festzustellen; und
eine dritte Feststellungseinheit, die dazu konfiguriert ist, den Wirtschaftlichkeitsfaktor jedes Aktuators gemäß der Geschwindigkeit des Fahrzeugs, dem Zielgiermoment, und einer voreingestellten Abbildungstabelle von der Geschwindigkeit und dem Zielgiermoment auf den Wirtschaftlichkeitsfaktor festzustellen.

Es sollte darauf hingewiesen werden, dass die Unterteilung der einzelnen Module der oben beschriebenen Einrichtung nur als eine Unterteilung hinsichtlich der logischen Funktion verstanden werden soll, und dass bei praktischer Implementierung die Module entweder vollständig bzw. teilweise in ein physikalisches Objekt integriert sein oder physikalisch separat voneinander angeordnet sein können. Zudem können diese Module entweder vollständig als Software durch das Aufrufen eines Verarbeitungselements, vollständig als Hardware, oder teilweise als Software durch das Aufrufen eines Verarbeitungselements und teilweise als Hardware realisiert werden. Beispielsweise kann das zweite Feststellungsmodul 702 entweder ein separat vorgesehenes Verarbeitungselement sein oder in einen Chip der oben erwähnten Einrichtung integriert sein. Alternativ kann es auch in Form von Programmcodes in einem oben erwähnten Speicher gespeichert werden und durch ein Verarbeitungselement der oben erwähnten Einrichtung aufgerufen und ausgeführt werden, um die Funktion des zweiten Feststellungsmoduls 702 zu übernehmen. Die Implementation anderer Module ist dazu ähnlich. Darüber hinaus können diese Module entweder vollständig bzw. teilweise zusammengefügt oder separat voneinander realisiert werden. Das Verarbeitungselement kann hierbei ein integrierter Schaltkreis mit Signalverarbeitungsfunktion sein. Bei der Umsetzung können die einzelnen Schritte des oben beschriebenen Verfahrens oder die oben beschriebenen einzelnen Module durch integrierte Logikschaltung der Hardware im Verarbeitungselement oder durch Anweisungen in Form einer Software realisiert werden.

Die oben in den Ausführungsbeispielen bereitgestellte Einrichtung kann zur Durchführung eines Verfahrens zur horizontalen Steuerung eines Fahrzeugs in den oben beschriebenen Ausführungsbeispielen verwendet werden und weist eine ähnliche Implementation und eine ähnliche technische Wirkung dazu auf, auf die hier nicht mehr näher eingegangen wird.

Fig. 8 ist ein schematisches Diagramm eines in einem Ausführungsbeispiel der Anmeldung bereitgestellten Fahrzeugs. Wie in Fig. 8 gezeigt, umfasst das Fahrzeug einen Prozessor 801 und einen kommunikativ mit dem Prozessor 801 verbunden Speicher 802.

Auf dem Speicher 802 sind computerausführbare Anweisungen gespeichert.

Der Prozessor 801 führt die auf dem Speicher 802 gespeicherten computerausführbaren Anweisungen aus, um ein Verfahren zur horizontalen Steuerung eines Fahrzeugs in den oben beschriebenen Ausführungsbeispielen zu implementieren.

Optional kann der Speicher 802 Direktzugriffsspeicher (Random Access Memory, RAM), aber auch nichtflüchtige Speicher (Non-Volatile Memory, NVM), wie z. B. zumindest einen Magnetdiskette-Speicher sowie USB-Disk, mobile Festplatte, Nur-Lese-Speicher, Magnetplatte, Compactdisc und dergleichen, umfassen.

Optional kann der Prozessor 801 entweder eine zentrale Recheneinheit (Central Processing Unit, CPU), ein anderer universaler Prozessor, ein digitaler Signalprozessor (Digital Signal Processor, DSP), oder ein anwendungsspezifischer integrierter Schaltkreis (Application Specific Integrated Circuit, ASIC) sein. Der universale Prozessor kann ein Mikroprozessor sein oder er kann unter anderem auch ein beliebiger herkömmlicher Prozessor sein. Die Schritte des im Zusammenhang mit der Erfindung offenbarten Verfahrens können unmittelbar durch einen Hardware-Prozessor vollständig durchgeführt werden oder mittels einer Kombination der Hardware mit Softwaremodulen im Prozessor durchgeführt werden.

Optional kann der Speicher 802 entweder eigenständig oder zusammen mit dem Prozessor 801 integriert sein. Wenn der Speicher 802 von dem Prozessor 801 unabhängig ist, können der Speicher 802 und der Prozessor 801 durch einen Bus miteinander verbunden sein. Es kann sich bei dem Bus um einen Industry-Standard-Architecture(ISA)-Bus, einen Peripheral-Component-Interconnect(PCI)-Bus oder einen Extended-Industry-Standard-Architecture(EISA)-Bus handeln. Der Bus kann in Adressenbus, Datenbus und Steuerbus unterteilt werden. Der Bus in den Figuren der Anmeldung dient nur der Erleichterung der Darstellung, aber es wird nicht darauf beschränkt, dass nur ein einziger Bus oder nur die Busse eines einzigen Typs vorhanden ist oder sind. Weiter umfasst das Fahrzeug einen Sender-Empfänger 803 für das Empfangen oder das Senden von verschiedenen Daten und/oder Anweisungen, die in dem Verfahren zur horizontalen Steuerung eines Fahrzeugs betroffen sind.

Das oben in den Ausführungsbeispielen bereitgestellte Fahrzeug kann zur Durchführung eines Verfahrens zur horizontalen Steuerung eines Fahrzeugs in den oben beschriebenen Ausführungsbeispielen verwendet werden und weist eine ähnliche Implementation und eine ähnliche technische Wirkung dazu auf, auf die hier nicht mehr näher eingegangen wird. Hierbei werden eine ähnliche Implementation und eine ähnliche technische Wirkung zu den oben beschriebenen Ausführungsbeispielen des Verfahrens erzielt, auf die hier nicht mehr näher eingegangen wird.

Darüber hinaus wird bei den Ausführungsbeispielen auch ein computerlesbares Speichermedium bereitgestellt, auf dem computerausführbare Anweisungen gespeichert sind, die beim Ausführen durch einen Prozessor das Verfahren der oben beschriebenen Ausführungsbeispiele implementieren. Hierbei werden eine ähnliche Implementation und eine ähnliche technische Wirkung zu den oben beschriebenen Ausführungsbeispielen des Verfahrens erzielt, auf die hier nicht mehr näher eingegangen wird.

Des Weiteren wird bei den Ausführungsbeispielen auch ein Computerprogrammprodukt umfassend ein Computerprogramm bereitgestellt, das beim Ausführen durch einen Prozessor das Verfahren der oben beschriebenen Ausführungsbeispiele realisiert. Hierbei werden eine ähnliche Implementation und eine ähnliche technische Wirkung zu den oben beschriebenen Ausführungsbeispielen des Verfahrens erzielt, auf die hier nicht mehr näher eingegangen wird.

Es versteht sich, dass in einigen bereitgestellten Ausführungsbeispielen aus den Ausführungsbeispielen der vorliegenden Anmeldung die offenbarte Einrichtung und das offenbarte Verfahren auf andere Weise realisiert werden können. Beispielsweise dienen die oben beschriebenen Vorrichtungsausführungsbeispiele lediglich zur Veranschaulichung. Beispielsweise stellt die Aufteilung des Systems nur eine logische Funktionsteilung dar, und bei der tatsächlichen Implementierung sind andere Aufteilungen verwendbar, wobei beispielsweise mehrere Einheiten oder Komponenten miteinander kombinierbar oder in ein weiteres System integrierbar sind, oder wobei einige Merkmale weggelassen oder nicht durchgeführt werden können. Darüber hinaus kann es sich bei der gezeigten oder erörterten Kopplung bzw. unmittelbaren Kopplung bzw. Kommunikationsverbindung auch um eine mittelbare, elektrische, mechanische oder sonstige Kopplung bzw. eine Kommunikationsverbindung der Einrichtungen oder Einheiten über einige Schnittstellen handeln.

Die oben als separate Komponente beschriebenen Einheiten können entweder physikalisch oder nicht physikalisch voneinander separat sein. Eine als Einheit gezeigte Komponente kann ebenfalls entweder physikalisch oder nicht physikalisch vorhanden sein, also sie kann sich an einem Ort befinden oder auf mehrere Netzwerkeinheiten verteilt sein. Nach dem praktischen Bedarf kann ein Teil oder alle der Einheiten darin ausgewählt werden, um die Aufgabe der technischen Lösung gemäß den Ausführungsbeispielen zu erfüllen.

Darüber hinaus können die funktionellen Einheiten in den Ausführungsbeispielen der Anmeldung in eine Prozessoreinheit integriert sein oder jeweils physikalisch separat sein. Zudem können zwei oder mehr Einheiten in eine Einheit integriert sein. Die oben beschriebene integrierte Einheit kann entweder in Form einer Hardware oder einer Kombination einer Hardware mit einer Software-Funktionseinheit realisiert werden.

Die oben erwähnte integrierte Einheit in Form einer Software-Funktionseinheit kann auf einem computerlesbaren Speichermedium gespeichert werden. Die oben erwähnte Software-Funktionseinheit ist auf einem Speichermedium gespeichert und umfasst einige Anweisungen, die die Durchführung einiger Schritte des in den Ausführungsbeispielen der Anmeldung beschriebenen Verfahrens durch einen Computer (Personal Computer, Server, Netzwerkgerät und dergleichen) oder einen Prozessor ermöglichen. Zu dem oben erwähnten Speichermedium gehören USB-Disk, Wechselfestplatte, Read-Only-Memory (ROM), Random-Access-Memory (RAM), Magnetplatte, optische Diskette, und verschiedene Medien, die Programmcodes tragen können.

Dem Fachmann ist klar, dass der Einfachheit und Übersichtlichkeit halber die Beschreibung zwar unter Verwendung des Beispiels der Aufteilung der funktionalen Module erfolgt. Aber in praktischen Anwendung können nach Bedarf die Funktionen auf unterschiedliche Funktionsmodule verteilt werden, d. h. die innere Struktur der Einrichtung wird auf unterschiedliche funktionale Module unterteilt, um alle oder ein Teil der oben beschriebenen Funktionen zu erfüllen. Für die konkrete Vorgehensweise der oben beschriebenen Einrichtung wird auf den entsprechenden Vorgang in den oben beschriebenen Ausführungsbeispielen des Verfahrens verwiesen, auf den nicht mehr näher eingegangen wird.

Die vorangegangenen Ausführungsbeispiele dienen nur der Beschreibung der technischen Lösungen der Anmeldung, ohne sie zu beschränken. Obwohl oben die Anmeldung anhand der Ausführungsbeispiele detailliert beschrieben wurde, sollte dem Fachmann klar sein, dass Modifikationen an den beschriebenen technischen Lösungen in den vorangegangenen Ausführungsbeispielen oder äquivalente Substitutionen eines Teils der technischen Merkmale vorgenommen werden können. Die Essenz der entsprechenden technischen Lösungen soll nicht wegen der Veränderungen oder Substitutionen von dem Geist und dem Umfang der technischen Lösungen in den Ausführungsbeispielen der Anmeldung abweichen.

Andere Ausführungsformen der Anmeldung sind für den Fachmann unter Berücksichtigung der Beschreibung und nach Umsetzung der hierin veröffentlichten Erfindung leicht vorstellbar. Die Anmeldung soll jegliche Variationen, Anwendungen oder adaptive Veränderungen der Anmeldung, die dem allgemeinen Prinzip der Anmeldung folgen und hierin nicht veröffentlichte, aber bekannte Kenntnisse bzw. herkömmliche Techniken im technischen Gebiet umfassen, abdecken. Die Beschreibung und die Ausführungsbeispiele sollen lediglich als beispielhaft angesehen werden. Der wirkliche Umfang und Geist der Anmeldung sind durch die Ansprüche definiert.

Es versteht sich, dass die Anmeldung nicht auf die oben beschriebenen und in den Figuren dargestellten genauen Strukturen beschränkt sein soll und modifiziert bzw. verändert werden kann, ohne von ihrem Umfang abzuweichen. Der Umfang der Anmeldung ist lediglich durch die beigefügten Ansprüche definiert.

## Patentansprüche

1. Verfahren zur horizontalen Steuerung eines Fahrzeugs, **dadurch gekennzeichnet, dass** das Verfahren die folgenden Schritte umfasst:
Feststellen eines Leistungsbewertungsfaktors jedes Aktuators des Fahrzeugs gemäß Echtzeitbetriebsparametern und einem Zielgiermoment des Fahrzeugs, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben;
Feststellen von Giermoment-Verteilungsfaktoren der einzelnen Aktuatoren gemäß dem Leistungsbewertungsfaktor jedes Aktuators; und
Verteilen des Zielgiermoments auf die entsprechenden Aktuatoren gemäß den Giermoment-Verteilungsfaktoren der einzelnen Aktuatoren, um die horizontale Steuerung des Fahrzeugs zu erzielen.

2. Verfahren nach Anspruch 1, **dadurch gekennzeichnet, dass** die Aktuatoren zumindest einen von Antriebsaktuator, Bremsaktuator, Lenkaktuator und Federungsaktuator umfassen und der Leistungsbewertungsfaktor zumindest einen von Stabilitätsfaktor, Komfortfaktor und Wirtschaftlichkeitsfaktor umfasst.

3. Verfahren nach Anspruch 1 oder 2, **dadurch gekennzeichnet, dass** das Verfahren ferner die folgenden Schritte umfasst:
Feststellen eines Einstellgewichtes jedes Aktuators, das seinem Leistungsbewertungsfaktor entspricht, gemäß einem vorbestimmten Zustand einer horizontalen Steuerdomäne des Fahrzeugs und einem Typ der Präferenz des Fahrers, wobei der Zustand einer horizontalen Steuerdomäne des Fahrzeugs dazu verwendet wird, das Sicherheitsniveau der horizontalen Steuerung des Fahrzeugs anzugeben;
wobei das Feststellen von Giermoment-Verteilungsfaktoren der einzelnen Aktuatoren gemäß dem Leistungsbewertungsfaktor jedes Aktuators Folgendes umfasst:
Feststellen von Giermoment-Verteilungsfaktoren der einzelnen Aktuatoren gemäß dem Leistungsbewertungsfaktor und dem Einstellgewicht jedes Aktuators.

4. Verfahren nach Anspruch 3, **dadurch gekennzeichnet, dass** die Bestimmung des Zustands der horizontalen Steuerdomäne des Fahrzeugs Folgendes umfasst:
Bestimmen des Zustands der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs,
wobei der Zustand der horizontalen Steuerdomäne des Fahrzeugs in aufsteigender Reihenfolge von Sicherheitsniveaus einen kritischen Bereich, einen gefährlichen Bereich, einen Übergangsbereich und einen stabilen Bereich umfasst.

5. Verfahren nach Anspruch 4, **dadurch gekennzeichnet, dass** das Bestimmen des Zustands der horizontalen Steuerdomäne des Fahrzeugs gemäß einem Vergleichsergebnis der Summe von horizontalen Potenzialen der Aktuatoren mit dem Zielgiermoment und/oder gemäß einem Sicherheitsfaktor des gesamten Fahrzeugs Folgendes umfasst:
Bestimmen, dass sich der Zustand der horizontalen Steuerdomäne des Fahrzeugs in dem kritischen Bereich befindet, wenn das Zielgiermoment die Summe von horizontalen Potenzialen erreicht oder wenn der Sicherheitsfaktor des gesamten Fahrzeugs einen ersten vorgegebenen Schwellenwert N1 erreicht;
Bestimmen, dass sich der Zustand der horizontalen Steuerdomäne des Fahrzeugs in dem gefährlichen Bereich befindet, wenn das Zielgiermoment die Summe von horizontalen Potenzialen nicht erreicht und wenn der Sicherheitsfaktor des gesamten Fahrzeugs einen zweiten vorgegebenen Schwellenwert N2 erreicht aber den ersten vorgegebenen Schwellenwert N1 nicht erreicht;
Bestimmen, dass sich der Zustand der horizontalen Steuerdomäne des Fahrzeugs in dem Übergangsbereich befindet, wenn der Sicherheitsfaktor des gesamten Fahrzeugs einen dritten vorgegebenen Schwellenwert N3 erreicht aber den zweiten vorgegebenen Schwellenwert N2 nicht erreicht; und
Bestimmen, dass sich der Zustand der horizontalen Steuerdomäne des Fahrzeugs in dem stabilen Bereich befindet, wenn der Sicherheitsfaktor des gesamten Fahrzeugs den dritten vorgegebenen Schwellenwert N3 nicht erreicht, wobei N1 > N2 > N3 gilt.

6. Verfahren nach Anspruch 4 oder 5, **dadurch gekennzeichnet, dass** die Bestimmung des Sicherheitsfaktors des gesamten Fahrzeugs Folgendes umfasst:
Ermitteln einer Abweichung in Bezug auf Gierwinkelgeschwindigkeit gemäß einem Unterschied zwischen einer Soll-Gierwinkelgeschwindigkeit und einer Ist-Gierwinkelgeschwindigkeit des Fahrzeugs;
Ermitteln einer Abweichung in Bezug auf Schwerpunkt-Schwimmwinkel gemäß einem Unterschied zwischen einem Soll-Schwerpunkt-Schwimmwinkel und einer Ist-Gierwinkelgeschwindigkeit des Fahrzeugs; und
Bestimmen des Sicherheitsfaktors des gesamten Fahrzeugs aus der gewichteten Summe von der Abweichung in Bezug auf Gierwinkelgeschwindigkeit, der Abweichung in Bezug auf Schwerpunkt-Schwimmwinkel und den Beschleunigungen in der lateralen Richtung und der Längsrichtung des Fahrzeugs.

7. Verfahren nach Anspruch 3, **dadurch gekennzeichnet, dass** das Einstellgewicht ein erstes Gewicht, das dem Stabilitätsfaktor entspricht, ein zweites Gewicht, das dem Komfortfaktor entspricht, und ein drittes Gewicht, das dem Wirtschaftlichkeitsfaktor entspricht, umfasst,
wobei das Feststellen von Giermoment-Verteilungsfaktoren der einzelnen Aktuatoren gemäß dem Leistungsbewertungsfaktor und dem Einstellgewicht jedes Aktuators Folgendes umfasst:
Feststellen des Verteilungsfaktors für jeden Aktuator aus der Summe von dem Produkt aus dem Stabilitätsfaktor und dem ersten Gewicht, dem Produkt aus dem Komfortfaktor und dem zweiten Gewicht, und dem Produkt aus dem Wirtschaftlichkeitsfaktor und dem dritten Gewicht; und
Feststellen von Giermoment-Verteilungsfaktoren jedes Aktuators gemäß einem Verhältnis des Verteilungsfaktors des Aktuators zu der Summe der Verteilungsfaktoren der einzelnen Aktuatoren,
wobei das Einstellgewicht basierend auf einer voreingestellten Abbildungstabelle von den Zuständen der horizontalen Steuerdomäne des Fahrzeugs und den Typen der Präferenz des Fahrers auf die Einstellgewichte erhalten wird.

8. Verfahren nach einem der Ansprüche 1 bis 6, **dadurch gekennzeichnet, dass** das Feststellen eines Leistungsbewertungsfaktors jedes Aktuators des Fahrzeugs gemäß Echtzeitbetriebsparametern und einem Zielgiermoment des Fahrzeugs zumindest einen der folgenden Schritte umfasst:
Feststellen des Stabilitätsfaktors jedes Aktuators gemäß dem Verhältnis des horizontalen Potenzials des Aktuators zu dem Zielgiermoment;
Feststellen des Komfortfaktors jedes Aktuators gemäß der Geschwindigkeit des Fahrzeugs, dem Zielgiermoment, und einer voreingestellten Abbildungstabelle von der Geschwindigkeit und dem Zielgiermoment auf den Komfortfaktor; und
Feststellen des Wirtschaftlichkeitsfaktors jedes Aktuators gemäß der Geschwindigkeit des Fahrzeugs, dem Zielgiermoment, und einer voreingestellten Abbildungstabelle von der Geschwindigkeit und dem Zielgiermoment auf den Wirtschaftlichkeitsfaktor.

9. Einrichtung zur horizontalen Steuerung eines Fahrzeugs, **dadurch gekennzeichnet, dass** die Einrichtung Folgendes umfasst:
ein erstes Feststellungsmodul, das dazu konfiguriert ist, einen Leistungsbewertungsfaktor jedes Aktuators des Fahrzeugs gemäß Echtzeitbetriebsparametern und einem Zielgiermoment des Fahrzeugs festzustellen, wobei der Leistungsbewertungsfaktor dazu verwendet wird, den Einfluss auf die Qualität des Fahrzustands des Fahrzeugs und/oder auf die Betriebskosten beim Betrieb des Aktuators anzugeben;
ein zweites Feststellungsmodul, das dazu konfiguriert ist, Giermoment-Verteilungsfaktoren der einzelnen Aktuatoren gemäß dem Leistungsbewertungsfaktor jedes Aktuators festzustellen; und
ein Verteilungsmodul, das dazu konfiguriert ist, das Zielgiermoment auf die entsprechenden Aktuatoren gemäß den Giermoment-Verteilungsfaktoren der einzelnen Aktuatoren zu verteilen, um die horizontale Steuerung des Fahrzeugs zu erzielen.

10. Fahrzeug, **dadurch gekennzeichnet, dass** es einen Prozessor und einen kommunikativ mit dem Prozessor verbunden Speicher umfasst,
wobei der Speicher computerausführbare Anweisungen umfasst,
und wobei der Prozessor die auf dem Speicher gespeicherten computerausführbaren Anweisungen ausführt, um ein Verfahren zur horizontalen Steuerung eines Fahrzeugs nach einem der Ansprüche 1 bis 8 zu implementieren.

11. Computerlesbares Speichermedium, **dadurch gekennzeichnet, dass** in dem computerlesbaren Speichermedium computerausführbare Anweisungen gespeichert sind, die beim Ausführen durch einen Prozessor dazu verwendet werden, ein Verfahren zur horizontalen Steuerung eines Fahrzeugs nach einem der Ansprüche 1 bis 8 zu implementieren.

12. Computerprogrammprodukt, **dadurch gekennzeichnet, dass** das Computerprogrammprodukt ein Computerprogramm umfasst, das beim Ausführen durch einen Prozessor ein Verfahren zur horizontalen Steuerung eines Fahrzeugs nach einem der Ansprüche 1 bis 8 implementiert.
